# EUROPEAN PATENT SPECIFICATION

(11) **EP 3 660 868 B1**
(45) Date of publication and mention of the grant of the patent: **25.10.2023**
(21) Application number: 19205392.4
(22) Date of filing: 25.10.2019
(51) Int. Cl.: H01B 1/12, F03G 7/00, H01M 4/60

(54) **ELECTRICALLY CONTROLLABLE DEVICE AND METHOD**
ELEKTRISCH STEUERBARE VORRICHTUNG UND VERFAHREN
DISPOSITIF ET PROCÉDÉ A COMMANDE ÉLECTRIQUE

(30) Priority: 28.11.2018 EP 18208931
(43) Date of publication of application: 03.06.2020
(73) Proprietor: RISE Research Institutes of Sweden AB, 501 15 Borås (SE)
(72) Inventor: STAVRINIDOU, Eleni, 602 22 NORRKÖPING (SE); BERGGREN, Magnus, 602 18 NORRKÖPING (SE); GLADISCH, Johannes, 602 25 NORRKÖPING (SE); ZOZOULENKO, Igor, 602 20 NORRKÖPING (SE); GOSH, Sarbani, 602 18 NORRKÖPING (SE)
(74) Representative: AWA Sweden AB

(56) References cited:
- WO-A1-2011/094747
- WO-A1-2019/097249
- US-A1- 2008 257 718
- US-A1- 2013 328 443
- DAVIDE MOIA ET AL: "A salt water battery with high stability and charging rates made from solution processed conjugated polymers with polar side chains", ARXIV.ORG, CORNELL UNIVERSITY LIBRARY, 201 OLIN LIBRARY CORNELL UNIVERSITY ITHACA, NY 14853, 28 November 2017 (2017-11-28), XP081297882,
- GALLAZZI M C ET AL: "Poly(alkoxy-bithiophenes) sensors for organic vapours", SENSORS AND ACTUATORS B: CHEMICAL, ELSEVIER BV, NL, vol. 88, no. 2, 15 January 2003 (2003-01-15), pages 178-189, XP004399087, ISSN: 0925-4005, DOI: 10.1016/S0925-4005(02)00323-4
- PIOGGIA G ET AL: "Preparation and characterization of conducting chemo-sensitive layers based on alkoxy-substituted polythiophenes; Preparation and characterization of conducting chemo-sensitive layers", MEASUREMENT SCIENCE AND TECHNOLOGY, IOP, BRISTOL, GB, vol. 17, no. 12, 1 December 2006 (2006-12-01), pages 3265-3271, XP020103304, ISSN: 0957-0233, DOI: 10.1088/0957-0233/17/12/011

## Description

### TECHNICAL FIELD

The present invention relates to the field of electrically controllable devices comprising a conducting macromolecular material. The present invention moreover relates to methods for electrically controlling conducting macromolecular materials, and uses thereof.

### TECHNICAL BACKGROUND

Various materials can change in volume or dimensions after application of stimulus. The stimulus can be thermal, electrical, electrochemical, pressure, ionic strength, change in pH. Conducting polymers can change in volume during electrochemical doping (oxidation) or dedoping (reduction). Usually the change in volume is defined by the size of the dopant. If the dopant molecule is large, then it is considered to be immobile and entrapped within the film. When the film is dedoped (reduced) the cations will enter the film to compensate the dopant molecules thus the film will swell. Moreover, when the material is doped the cations that have been compensating the dopant will be expelled from the film and the film will collapse. Accordingly, if the dopant is a small molecule then it is considered mobile. When the film is doped (oxidized) then the dopant enters the film and the film swells. Likewise, when it is dedoped (reduced) the dopant molecules are expelled from the film and the film will collapse or contract.

Polypyrrole is the most studied material in this respect, as it up till now has exhibited the highest volume change. The mechanism of volume change has been described by inclusion and ions within the film. However typical strains are in the range of 2% with in the direction parallel to the film while thickness changes in the range of 40%.

The characterization of the dimensional changes of conducting polymers is typically done in bilayer structures. The most usual is in an actuator architecture, the bilayer actuator; a conducting polymer film forming a bilayer with a substrate that does not exhibit any dimensional changes. When voltage is applied the actuator bends due to the expansion or contraction of the conducting polymer film. These devices convert the polymer's small strain into a large actuating strain. An extension of the bilayer actuator is artificial muscle while other applications include microvalves and braille screens.

There are many limitations that arise due to the limited deposition thickness of the commonly used conjugated polymers. For example, polypyrrole is usually electropolymerized. This means that the film is formed on top of a conductor and the typical thicknesses achieved are in the range of few micrometers hindering any macroscopic volume changes upon switching. Further, the structure of the film is not homogenous. Other materials that exhibit change in volume after application of electric field are carbon nanotubes, elastomers, ion gels. Typically, these materials require very high voltages and the mechanism of volume change is different than for conducting polymers.

US2013/328443A1 discloses a liquid electrolyte device with a deformable electrode containing polymers and a gelling agent.

Hence, there is a need for new materials and devices that addresses the above mentioned limitations.

### SUMMARY OF THE INVENTION

An object of the present invention is to provide a device and method for electrical control of conducting macromolecular materials.

According to a first aspect there is provided a device comprising a first electrode, a second electrode, and a liquid electrolyte, wherein said first and second electrodes are arranged within said liquid electrolyte and are arranged to apply an voltage to said electrodes, wherein said first electrode comprises a conducting macromolecular material that is transferrable from a first state to a second state upon electrochemical switching in dependence upon said voltage applied between said electrodes, and wherein said material when present in said second state has a volume of at least 2.5 of the volume of said material in said first state.

The first aspect is based on the insight of the superior swelling capacity of conducting macromolecular materials, and that such swelling to a volume of at least 2.5 of the initial volume may be manipulated using an applied voltage. The macromolecular materials of the prior art do not show such swelling behavior.

As an example, polypyrrole (PPy) has been the most widely used and studied conjugated polymer for electrochemical actuators as it, so far, has outperformed other materials. However, the volumetric change of PPy has been limited to 1.4 of the initial volume reversibly and 2 of the initial volume irreversibly, thus restricting potential applications of this technology.

In one embodiment, the first electrode is a working electrode. In one embodiment, the second electrode is a counter electrode.

In one embodiment, the first electrode is a working electrode, as an example the working electrode may be a coated working electrode, such as a coated carbon fiber working electrode.

In embodiments, the device further comprises a reference electrode, such as an Ag/AgCl electrode.

In further embodiments of the first aspect, the electrodes are connectable to a power source. The power source may be configured for applying a voltage to the electrodes. The power source may for example be a DC power source or an AC power source.

In embodiments of the first aspect, the device itself comprises the power source connected to the electrodes.

Furthermore, the device may comprise a container comprising the electrodes and the electrolyte.

In embodiments of the first aspect, the device comprises at least two electrodes, such as at least three electrodes. As an example, the device may contain two electrodes or three electrodes.

The conducting macromolecular material is further defined in claim 1 and may have a metallic conductivity or be a semiconductor.

In the context of the present disclosure, "p(gT2)" and "p(g3T2)" are used interchangeably to define the same polymer.

According to the claims of the present invention the conjugated polymer is selected from the group consisting of homo-alkoxybithiophene polymers of the formulas p(gkT2) where k>2 and p(giT2gnT2) or p(giT2-gnT2), i+n>4, i=0,1 ,2,... n=0,1,2,... and k,i,n denote the length of the glycol chain, optionally said conjugated polymer may be selected from the group consisting of p(g2T2-g3T2), p(g3T2), p(g2T2-g4T2), p(g1T2-g5T2), or p(g0T2-g6T2).

The conducting macromolecular material may be coated onto said first electrode.

The conducting macromolecular material may be in solid form in said first state. Further, the conducting macromolecular material may be in electrically neutral form in said first state. Even further, the conducting macromolecular material may be in a geometrically contracted form in said first state. Even further, the conducting macromolecular material may be hydrophobic in said first state.

The conducting macromolecular material may be in gel phase in said second state. Further, the macromolecular material may be in a geometrically expanded form in said second state. Even further, the macromolecular material may be hydrophilic and/or hygroscopic in said second state.

The conducting macromolecular material may be reversibly transferrable from the first state to the second state. The conducting macromolecular material may thus be capable of being transferred back to the first state, i.e. be capable of collapsing or contracting from the second state, based on a change in the applied voltage.

The conducting macromolecular material in said second state can have a relative volume change of at least 1-5%, at least 5-20%, at least 20-30%, at least 30-50%, at least 50-100%, at least 100-500%, at least 500-1000%, at least 1000-10000% and at least 10000-100000% in respect to the volume of said material in said first state. In particular, said conducting macromolecular material when present in said second state may have a volume of at least 1.5 times, 2 times, 2.5 times, 3 times, 4 times, 5 times, 10 times, 15 times, 20 times, 25 times, 50 times, 75 times, or 100 times or 1000 times the volume of the same conducting macromolecular material when present in said first state. In other embodiments, said conducting macromolecular material when present in said second state may have a volume of at least 100 times the volume of the same conducting macromolecular material when present in said first state, such as a volume of at least 150 times, 200 times, 300 times, 400 times, 500 times, 600 times, 700 times, 800 times, 900 times or 1000 times the volume of the same conducting macromolecular material when present in said first state. In yet further embodiments, said conducting macromolecular material in said second state has a relative volume change of at least 150-500%, at least 500-2000%, at least 2000%-3000%, at least 3000-5000%, at least 5000%-10000%, at least 10000%-50000%, at least 50000%-100000% the volume of said material in said first state.

The first electrode may comprise an electrically conducting or insulating substrate. Further, the first electrode may consist of a conducting macromolecular material.

The electrically conducting substrate may be selected from a metal, a conjugated polymer, and carbon, or metal coated on a quartz crystal.

The insulating substrate may be selected from one or more of a nonconducting natural polymer and a synthetic polymer. Insulating materials of the present invention may be wood, nanocellulose, cellulose, plastics.

The substrate may be a porous substrate, such as a filter, a membrane, a foam, or a sponge.

In one embodiment of the present invention the conducting macromolecular material is coated onto said first electrode, said first electrode optionally being an electrically conducting solid or porous substrate, or an insulating solid or porous substrate.

The electrolyte may be an aqueous electrolyte optionally selected from NaCl, KCI, LiClO₄, a hormone, a peptide, a polypeptide and a protein. Further, the electrolyte may be a polar solvent optionally selected from acetonitrile.

The electrochemical switching transfers the conducting macromolecular material from the first state to the second state by the application of a voltage. Further, said electrochemical switching may represent a change in oxidation state of the polymer. Said electrochemical switching may represent an oxidation of the conducting macromolecular material to the second state. Further said electrochemical switching may represent a reduction of the polymer to the first state.

The volume change can be controlled from the applied electric voltage within the electrochemical window of the material.

The first and second electrodes may be arranged to apply a voltage in the range of from -1.0 V to +1.0 V, such as in the range of from 0.8 V to 0.8 V, or in the range of from -0.5 V to +0.5 V. In further embodiments the first and second electrodes may be arranged to apply a voltage in the range of - 0.2 to +0.8, or in the range of -0.2 to +0.5.
An advantage with the present invention is that low voltages may be used and still the expected effect is achieved, compared to prior art that uses much higher voltages of at least 5 V and still does not achieve as high volume change as of the present invention. The use of low voltages also allows the present invention to use aqueous electrolytes without causing electrolysis of water. In embodiments, the conducting macromolecular material is configured such that at least 50% of the volume change from the first state to the second state occurs within the first 30 seconds of said electrochemical switching.

According to a second aspect, there is provided a method for electrically controlling the volume of a conducting macromolecular material, the method comprising:
applying a voltage between a first and second electrode being arranged within a liquid electrolyte, said first electrode comprising a conducting macromolecular material, said applied voltage transferring said material from a first state to a second state, wherein said material in said second state has a volume of at least 2.5 of the volume of said material in said first state.

In one embodiment of the second aspect, said first electrode is a conducting porous or insulating porous substrate coated with said conducting macromolecular material, such that said transferring of said material from a first state to a second state alters the porosity of said first electrode.

In another embodiment of the second aspect, the method is further comprising reducing said applied voltage, thereby transferring said material from said second state back to said first state in which the material has a lower volume. As an example, the conducting macromolecular material may then in said second state have a volume that is between 2.5-3.5 of the volume in said first state.

In yet another embodiment of the second aspect, said transferring said material from a first state to a second state is irreversible, and wherein the material in said second state has a volume that is at least 2.5 of the volume of said material in said first state.

In embodiments of the second aspect, the conducting macromolecular material is coated onto said first electrode, said first electrode optionally being an electrically conducting solid or porous substrate, or an insulating solid or porous substrate.

In embodiments of the second aspect, the first electrode is a conducting porous or insulating porous substrate coated with said conducting macromolecular material, such that said transferring of said material from a first state to a second state alters the porosity of said first electrode

According to a configuration of the second aspect, there is provided a method for electrically controlling the porosity of a conducting or insulating porous substrate, the method comprising:
applying a voltage between a first and second electrode being arranged within a liquid electrolyte, said first electrode being a conducting porous or insulating substrate coated with a conducting macromolecular material, said applied voltage transferring said material from a first state to a second state, wherein in said second state said material has a volume of at least 2.5 of the volume of said material in said first state, wherein transfer of said material from said first state to said second state alters the porosity of the substrate.

The conducting porous substrate may be selected from the group consisting of carbon fibers, carbon foams, carbon sponge, metal meshes, metal fibers, metal foams, and metal sponges.

The insulating substrate may be selected from one or more of a nonconducting natural and synthetic polymers.

The voltage may be applied in the range of from -1.0 V to +1.0 V, such as in the range of from 0.8 V to 0.8 V, or in the range of from -0.5 V to +0.5 V.

The voltage may be applied one time, thereby forming a one-time electrochemical switch. Further, the voltage may be applied one time, thereby forming a one-time flow switch or volume switch.

The voltage may be applied multiple times, thereby forming a reversible electrochemical switch. Further, the voltage may be applied multiple times, thereby forming a reversible flow switch or volume switch.

The substrate may furthermore have a predefined porosity.

The substrate may be loaded with a mixture of two or more molecules of different size, and by altering the porosity of said substrate, selective passage of one or more molecules having a size allowing passage through one or more pores of said substrate is allowed. In particular, passage through one or more pores may be controlled by the transferring the conducting macromolecular material from a first state to a second state, from a second state to a first state etc.

In one embodiment of the present invention an opening and closing of the pores in a porous substrate may be achieved at least 3 times, wherein the porous substrate is coated with the conducting macromolecular material. Said conducting macromolecular material may, dependent upon its state, optionally block passage through the one or more pores.

In another aspect, there is provided a hydrogel comprising a conducting macromolecular material comprising a conducting polymer selected from the group consisting of homo-alkoxybithiophene polymer, such as p(g2T2-g3T2), p(g3T2), p(g2T2-g4T2), p(g1T2-g5T2), or p(g0T2-g6T2), an aqueous solution and ions, wherein the redox state of said homo-alkoxybithiophene polymer is in its oxidized state.
The hydrogel could thus be a conductive macromolecular material in its second state as discussed in relation to the first aspect above.
The hydrogel could thus be switchable to a state having a lower volume based on a change in an applied voltage.

The oxidized state of said conducting polymer comprised in a hydrogel as disclosed above could be understood as an expanded state.

The hydrogel can moreover comprise a biomolecule, such as a negatively charged biomolecule. The biomolecule may be entrapped within the hydrogel according to procedures disclosed herein. Moreover, the biomolecule may be electronically released from the hydrogel by electrochemically reducing the polymer.

In another aspect, there is provided use of a device according to aspects disclosed herein for separation of two or more molecules of different size. The device comprises a conducting macromolecular material, which may be coated on a conducting porous material or an insulating porous material of defined porosity. Transfer of the conducting macromolecular material between the first state and the second state alters the porosity of the porous material, thereby allowing selective passage of a molecule having a size allowing passage through one or more pores of said substrate. In this way, a device according to the invention may be used for separation of one or more molecules contained in e.g. a mixture of different molecules.

In another aspect, there is provided use of the device according to aspects disclosed herein in a microfluidic system to control flow in a microcapillary. The conducting macromolecular material may be in the form of addressable pixels within a channel of a microfluidic system and upon electrochemical switching of the conducting macromolecular material, the flow in the microcapillary is tuned on or off due to the change in volume of the addressable pixels.

In another aspect, there is provided use of a device according to aspects disclosed herein for electronically addressed drug release. One or more of a negatively charged biomolecule, such as a drug, peptide, polypeptide and/or protein, may be entrapped in said conducting macromolecular material. Release of said one or more negatively charged biomolecule may be controlled by electrochemical switching of the conducting macromolecular material. Electrochemical switching may in this case refer to reduction of the conducting macromolecular material. The voltage magnitude, the duration of application of the voltage and the voltage swipe rate may be altered to control the delivery rate and the delivered amount of the biomolecule.

### BRIEF DESCRIPTION OF THE DRAWINGS

Figure 1a illustrates the chemical structure of the p(g2T2), p(g2T2-g3T2), p(g3T2), p(g2T2-g4T2), p(g1T2-g5T2), and p(g0T2-g6T2) polymers having a polythiophene backbone with methylated polyethylene glycol (PEG) sidechains.
Figure 1b illustrates a procedure of coating a polymer onto a carbon fiber.
Figure 1c illustrates the passive swelling of p(g3T2) when immersed into electrolyte.
Figure 1d illustrates the switching mechanism of conducting polymers, using a 2-electrode setup, and an experimental setup.
Figure 1e illustrates the switching mechanism of conducting polymers, using a 3-electrode setup.
Figures 1f-g illustrates the cyclic voltammograms (CVs) of p(g3T2) in the voltage window between -0.8 and 0.8 V at 10 mV/s acquired with a 2-electrode setup (2E) and three electrode setup (3E); in f) the first cycle; and g) the fourth cycle.

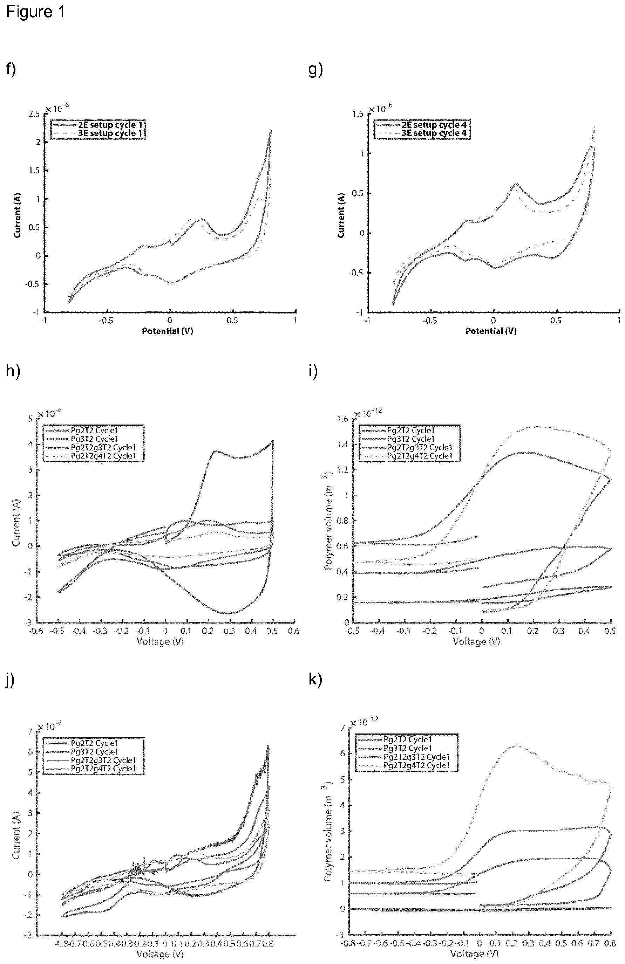

Figures 1h-k illustrates the volume change of different polymers of the p(gkT2) and p(giT2gnT2) or p(giT2-gnT2) family in a cyclic voltammetry experiment; in h) the current response for different polymers in cyclic voltammetry experiments between ±0.5 V; in i) the respective volume (change) response of the different polymers in the cyclic voltammetry experiments between ±0.5 V; in j) the current response of different polymers in cyclic voltammetry experiments between ±0.8 V; in k) the respective volume (change) response of the different polymers in the cyclic voltammetry experiments between ±0.8 V.
Figure 2a illustrates the first cycle expansion (left) and 49^{th} cycle expansion (right) of the p(g3T2) polymer on carbon fibers; a) top left illustration: initial state; middle left illustration: first cycle expanded; bottom left illustration: first cycle contracted; top right illustration: 48^{th} cycle contracted; middle right illustration: 49^{th} cycle expanded; bottom right illustration: 49^{th} cycle contracted.
Figure 2b illustrates example features of the p(g3T2) polymer on carbon fibers; the three illustrations to the left: initial state, 32^{nd} cycle expanded, 32^{nd} cycle contracted; the three illustrations to the right: initial state, 16^{th} cycle expanded, 16^{th} cycle contracted.
Figure 2c illustrates the first cycle volume change of p(g3T2) over the course of 5 minutes.
Figure 3a illustrates relative volume change of investigated fibers cycled at +/- 0.5 V.
Figure 3b illustrates relative diameter change of investigated fibers cycled at +/- 0.5 V.
Figure 3c illustrates relative changes in length for specific characteristics, parallel to the carbon fiber.
Figure 3d illustrates the ratio of the observed volume change and the volume change that can be accounted for by the ions going in and out of the polymer.
Figure 3e illustrates the relative change of material length during cycling when coated on a carbon fiber, wherein the solid line describes the relative average elongation and the dashed line describes the relative average shrinking.
Figure 4 illustrates the microscopy results of a section of a polymer fiber between switches 2 and 17 at +/-0.5 V.
Figure 5a and 5b illustrates the volume expansion and relative volume expansion of a polymer coated fiber in one section, as observed with the microscope at +/- 0.5 V, switched every 30 seconds.
Figure 5c illustrates relative volume change of the coated carbon fibers over the first cycles, including data for the frames where the voltage was applied for longer than 30 sec and a full image of the fibers were taken.
Figure 6 illustrates the long-term stability investigations of the p(g3T2) polymer over 300 cycles at +-0,5 V; a) polymer coated carbon fiber at 16^{th} cycle; b) polymer coated carbon fiber at 312^{th} cycle.
Figure 6c illustrates the relative volume change over 300 cycles (light colored line) compared to previously determined volume change for 50 cycles (dark line) fibers.
Figure 6d illustrates the relative volume change of p(g3T2) and other polymers of the p(gkT2) and p(giT2gnT2) or p(giT2-gnT2) family within every cycle in 300 cycles in a long-term switching stability experiment at the optimized voltage window of +0,5-0,2 V.
Figure 6e illustrates the relative volume change of p(g3T2) and other polymers of the p(gkT2) and p(giT2gnT2) or p(giT2-gnT2) family within every cycle in 300 cycles in expanded state relative to its initial state (rather than the total volume of the polymer).
Figure 6f illustrates the relative volume change with respect to the initial polymer volume of p(g3T2) and other polymers of the p(gkT2) and p(giT2gnT2) or p(giT2-gnT2) family within every cycle in 300 cycles in contracted state.
Figure 7 illustrates the swelling of the polymer at 0.8 V; a) the top three illustrations show: the initial state; first cycle expanded; first cycle contracted; b) the bottom three illustrations show: 32^{nd} cycle contracted; 33^{rd} cycle expanded, 33^{rd} cycle contracted.
Figure 8 illustrates the relative volume changes of the polymer, when 0.8 V is applied.
Figure 8b illustrates the relative expansion at the first expansion cycle at +0.8 V at multiple fibers (expansion of Figure 8).

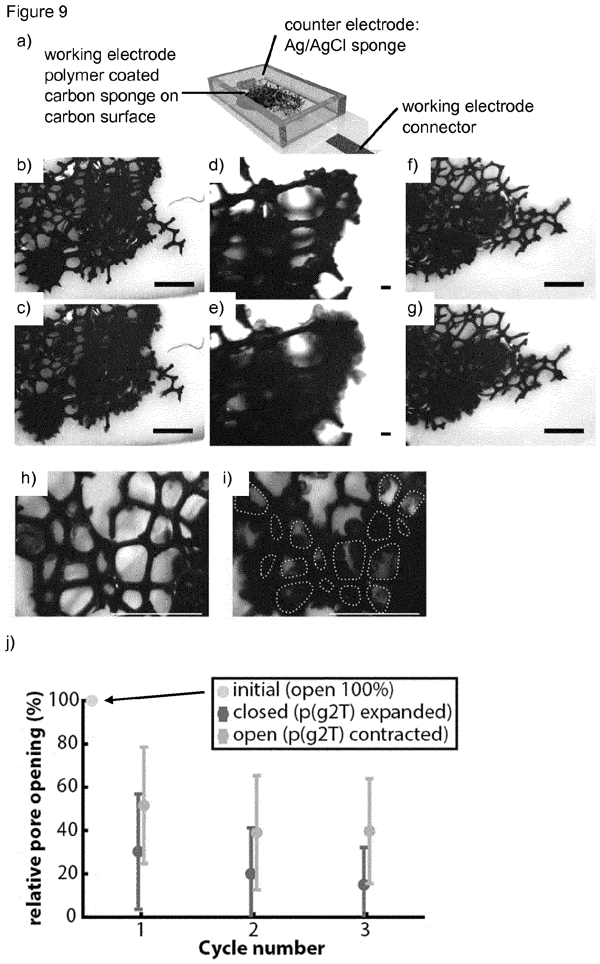

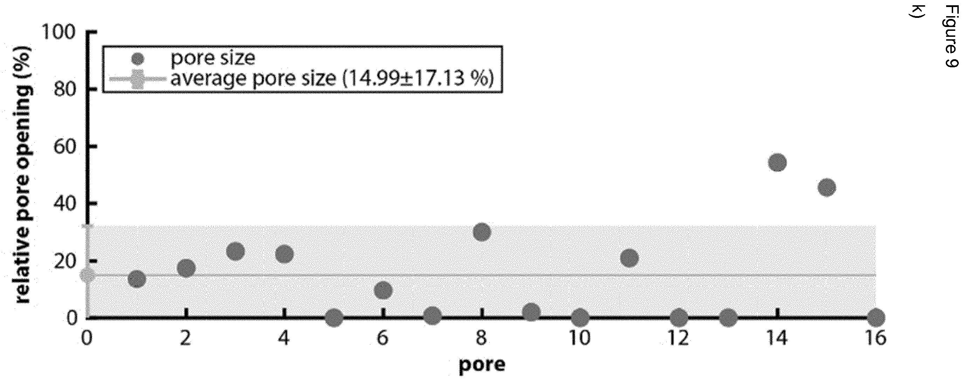

Figure 9 illustrates the voltage dependent pore size variation in a p(g2T) i.e. p(g3T2) coated carbon sponge; a) experimental setup; b) coated carbon mesh in contracted state; c) coated carbon mesh in expanded state; d) close up of the pores in b) and c) in open state; e) pores in closed state; f) noteworthy characteristics of coated carbon sponge, a bubble is entrapped in the sponge; g) the bubble in f) is pushed out of the mesh when the polymer is expanded; h) p(g3T2) coated carbon sponge before electrochemical switching; i) p(g3T2) coated carbon sponge in oxidized state, V=+0.5V, 3rd cycle (the circles indicate the initial pore size); j) the average pore opening in respect to the initial state in different open-close cycles of the p(g3T2) coated sponge; k) shows the relative pore opening percentage of the individual pores that have been observed in one embodiment of the present invention.
Figure 10 illustrates a p(g2T) i.e. p(g3T2) free standing electrode; a) initial state, no voltage is applied; b) cycle 2 at +0.8 V; cycle 2 at -0.8 V.
Figure 11a illustrates the p(g2T) i.e. p(g3T2) in chloroform filling a few mm of a glass capillary.
Figure 11b illustrates the p(g2T) i.e. p(g3T2) in chloroform, as a drop cast on Indium tin oxide (ITO).
Figures 11c and d illustrate carbon fibers and a mesh of carbon fibers coated with p(g2T) i.e. p(g3T2).
Figure 12 illustrates embodiments of the present invention; a) the conductive macromolecular material in solid state; b) the conductive macromolecular material in gel state.
Figure 13 illustrates a molecular dynamics system set-up.
Figure 14 illustrates a molecular dynamics system set-up, with neutral polymer and without ions.
Figure 15 illustrates a molecular dynamics system set-up, with charged polymer and with added ions.
Figure 16 illustrates a molecular dynamics system set-up, with charged polymer and with ions in the electrolyte.

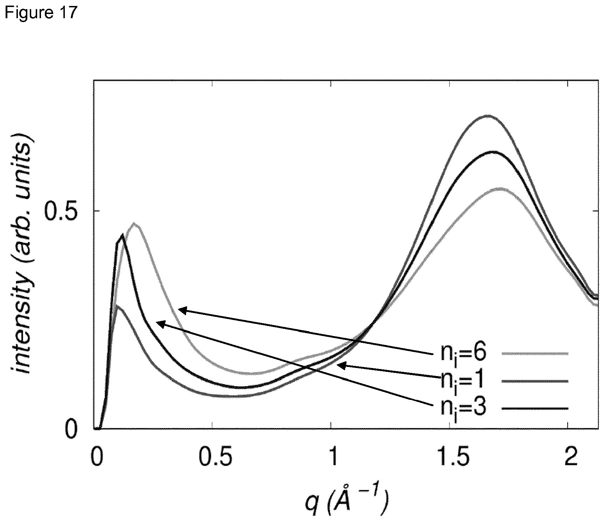

Figure 17 illustrates molecular dynamics with X-ray diffraction (XRD) of the polymer.

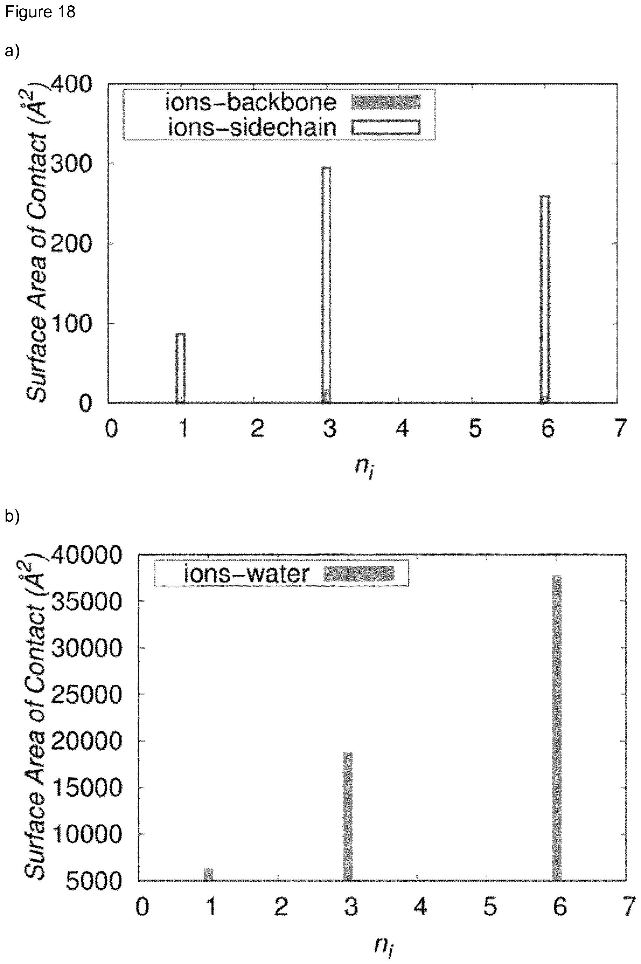

Figure 18 illustrates molecular dynamics derived calculations with the interactions of ions with (a) polymer and (b) water.

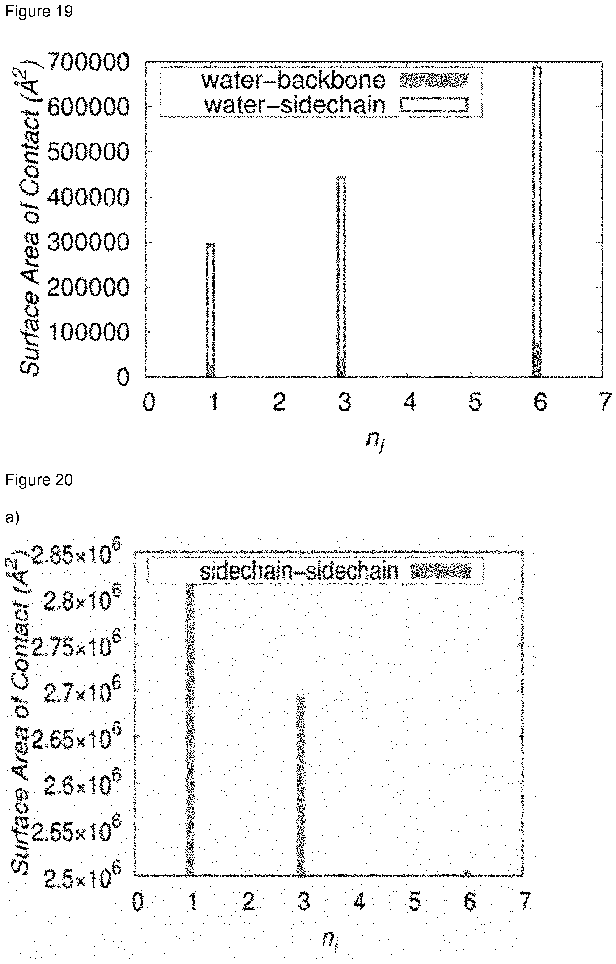

Figure 19 illustrates molecular dynamics with the interactions of water with the polymer backbone and sidechains.

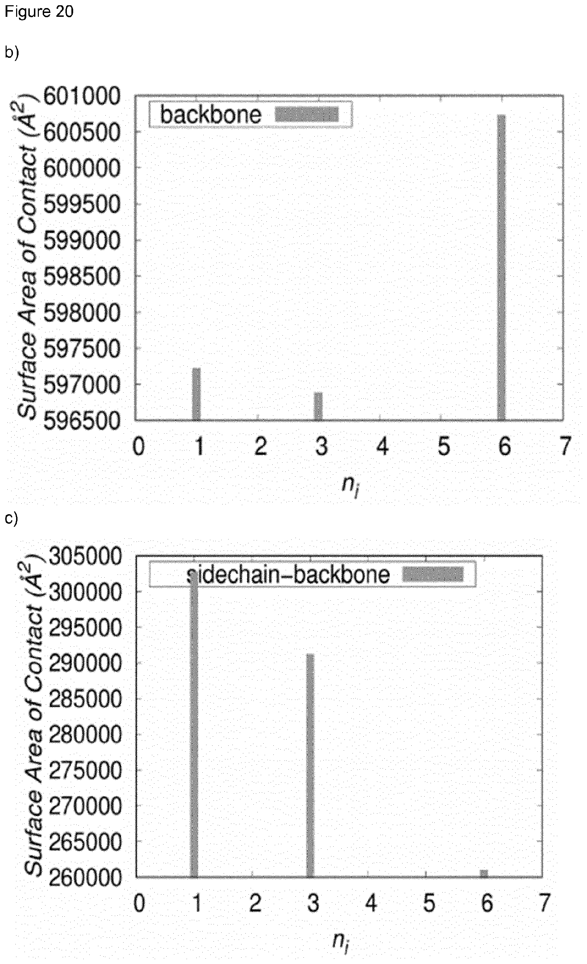

Figure 20 illustrates molecular dynamics of the interactions of the polymer; (a) sidechain-sidechain interactions, (b) backbone interactions, (c) sidechain-backbone interactions.

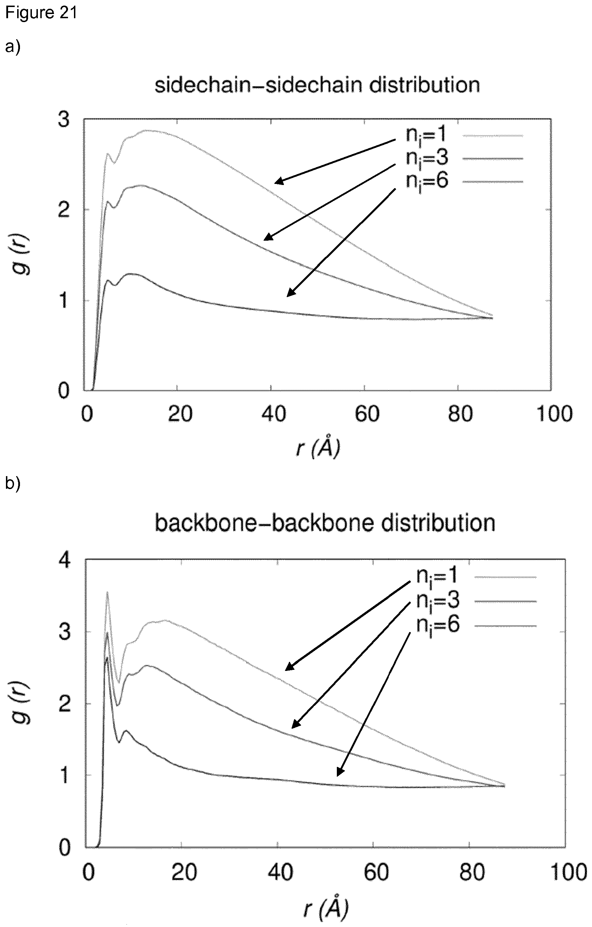

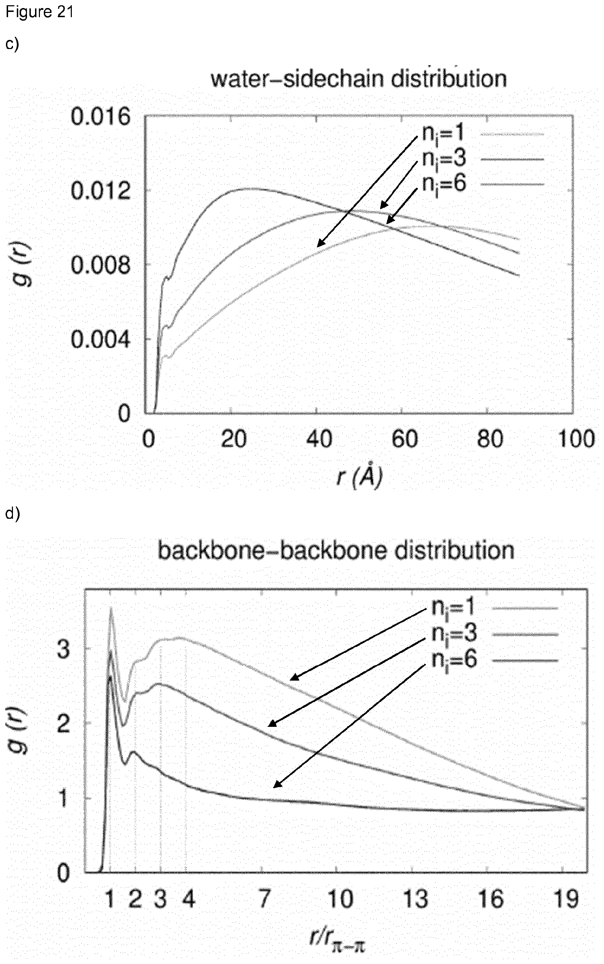

Figure 21 illustrates molecular dynamics of the polymer and water distribution; (a) sidechain-sidechain distribution, (b) backbone-backbone distribution, (c) water-sidechain distribution, (d) backbone-backbone distribution.
Figure 22 illustrates the relative polymer volume change (showing a different interpretation of data in figure 5c); in a) showing the relative volume change of the polymer in the expanded state (+0.5 V) in respect to the previous contracted state (-0.5 V); in b) showing the relative total fiber diameter change when electrochemically switched at ±0.5 V c) showing the relative polymer layer thickness change when electrochemically switched at ±0.5 V.
Figure 23 illustrates Quartz Crystal Microbalance experiments with a p(g3T2) layer. The film is electrochemically switched at ±0,5 V.
Figure 24 illustrates the key findings of the extended molecular dynamics simulations.
Figure 25 illustrates interactions between the components of the molecular dynamics simulation with radial distribution functions (g(r)) as a function of r of a) sidechains, b) sidechains from water molecules and c) of backbones (r_{π-π} = 0.39 nm defines the π-π stacking distance of the backbone) and d-i) surface areas of contact per atom between different elements (in Å²).
Figure 26 illustrates molecular dynamics simulation box of the polymer contraction mechanism.

### DETAILED DESCRIPTION OF THE INVENTION

The term "macromolecular material" means a very large molecule, such as a polymer or protein, consisting of many smaller structural units linked together. Further, the macromolecular material has a molecular weight above 1000 Da. The macromolecular material of the present invention displays electrical conductivity. Hence, the macromolecular material of the present invention is a conducting macromolecular material, or a semiconducting macromolecular material.

The term "electrochemical switching" means that when a macromolecular material such as a polymer is coated on an electrode and being immersed in an electrolyte, the oxidation state of the material may be electrochemically altered by applying a voltage between the material coated electrode and a counter electrode also immersed in the electrolyte. When applying a certain voltage on the coated electrode the material is reduced or oxidized.

The term "electrolyte" or "aqueous electrolyte" means a substance that produces an electrically conducting solution when dissolved in a polar solvent, such as water. The dissolved electrolyte separates into cations and anions, which disperse uniformly through the solvent. Electrically, such a solution is neutral. If an electric potential or voltage is applied to such a solution, the cations of the solution are drawn to the electrode that has an abundance of electrons, while the anions are drawn to the electrode that has a deficit of electrons. Examples of aqueous electrolytes with metal ions such as NaCl, KCl, LiClO₄ or electrolytes comprising of other polar solvents such as acetonitrile. Other examples are aqueous electrolytes wherein the ions can be organic molecules such us drugs, hormones, peptides, proteins and synthetic polymers. In these electrolytes usually the pH defines the charge of the molecule.

The term "electrochemical window" (EW) of a substance is the voltage range wherein a substance, for example the conductive macromolecular material of the present invention, can be reduced or oxidized without any side reactions for example oxygen reduction or electrolysis. The electrolysis of water has a standard potential of -1.23 V, meaning it ideally requires a voltage difference of 1.23 volts to split water. Hence, the voltages applied in the present invention is typically in the range between -1.0 V to +1.0 V.

The term "state" means a physical condition as regards to an internal or molecular form or structure. It is to be understood that "a first state" and "a second state" are used herein as relative terms. Thus, although cycling as disclosed herein allows transfer of a material from a first state to a second state, several iterations of such cycles are contemplated. For example, when after a certain number of cycles, a macromolecular material once again is transferred to a first state, in which the material may be in its contracted form, the material has not necessarily the same characteristics or volume as in the initial first state or in any previous state.

The term "characteristic" or "specific characteristic" relates to the different formations which arises when coating a macromolecular material onto a substrate.

The terms "microcapillary", "microcapillaries", and "microfluidic system" are used in the context of microfluidics which deals with the behavior, precise control and manipulation of fluids that are geometrically constrained to a small, typically sub-millimeter, scale.

The term "addressable pixels" means a pixel electrode that can be electrically addressed on the application of a voltage.

The term "carbon" in the context of conducting substrate, here the carbon is typically selected from the group of carbon materials consisting of graphite, fullerenes, carbon nanotubes, carbon nanofoams, and carbon nanofibers.

Volume and volume changes can preferably be visually determined by microscopy. Volume change should typically be understood as the relative volume change, i.e. the volume of a macromolecular material when it is in its expanded compared to the volume of the same material prior to expansion.

When e.g. conjugated polymers or conducting polymers are electrochemically addressed, they change not just in the redox state but also the dopants are entering or leaving the polymer matrix. For small ions, such as chlorine, the ions enter the polymer matrix when the anodic voltages are applied to the electrode with the coated polymer. That means a positive voltage is applied at the working electrode. In the case of the device of the present invention for example 0.5 V or 0.8 V. When the ions enter the polymer matrix, the polymer matrix is expanding. Then again, if the voltages are reversed, the ions leave the matrix and the volume of the polymer matrix decreases.

Upon application of 0.5 V during the first switch, the volume of the conducting macromolecular material may change by a factor of 10 (equals 1000%), whereas in later cycles the change in volume may be by a factor of 3 (equals 300%). Upon application of 0.8 V the first volume expansion can be even larger and vary between a factor of 20 to 160 (equals 2000% - 16000%). Compared to conducting polymers of the prior art, the volume expansion that can be accomplished by the present conducting macromolecular material is much higher.

The observation of this large volume change can likely not be attributed only to ions inserted upon switching. The total volume change is at least 100 times more than the volume that corresponds to the ions that are being up-taken by the polymer, considering their hydration sphere as well. Therefore, the mechanism that governs the dimensional changes in e.g. p(g3T2) during electrochemical switching is likely different than the one in e.g. polypyrrole, which has a mechanism that can be explained only by ion inclusions. In the case of the present conducting macromolecular material, such as p(g3T2), it undergoes a change in phase from a solid state in the neutral and contracted form to a gel state in the oxidized and expanded form. Thus, the gel state is a result of interaction within the polymer chains backbones (pi-pi stacking), the side chains (hydrogen bonding or electrostatic) or between the both. The fact that the conducting macromolecular material of the present invention e.g. p(g3T2) maintain pi-pi stacking in the gelled state justifies that the material is still conducting as percolation pathways are preserved for the electronic carriers. An effective pi-pi stacking between the chains is giving rise to a percolative network over the whole material is a prerequisite for a high mobility in conducting polymers.

Further, for the microscopic origin of the swelling behavior, this process is mainly governed by electrostatic interaction between charged polymer and counterions and related to the water intake facilitated by the counterions entering the polymer film during oxidation. Hence, the polymer films become positively charged during the oxidation. Consequently, negative chloride anions are forced by electrostatic forces from the surrounding water into the film to compensate the positive charges. The anions are surrounded by hydration shells while diffusing in a polymer. Hence, the negative counterions bring along water molecules into the polymer film making it swell. It is also noteworthy that hydrophobicity and hydrophilicity of different parts of polymers are also important for swelling.

The backbone of the polymer is hydrophobic whereas the sidechains are hydrophilic. On one hand, water can easily penetrate the polymer because of the hydrophilicity of the sidechains. At the same time the hydrophobic backbones do not like water and hence help to form gel-like structure by keeping the connections between them and preventing the material from getting dispersed in water.

The reverse process of de-swelling when the polymer is reduced back to its neural state in the second part of the voltammetry cycle (see e.g. figures 1f-g, wherein the cyclic voltammograms (CVs) indicate that most of the redox activity occurs above -0.3 V). The volume of the polymer shrinks; however, its final volume remains larger than the initial one, with the volume expansion Vex ≈ 80%, which has also been confirmed by molecular dynamics simulations. This persistence of swelling of the neutral state at the end of the first cycle is attributed to the presence of the water inside the polymer, which cannot be completely removed from the film in the course of the voltammetry cycle.

Thus, the conducting macromolecular material of the present invention comprising a conjugated polymer changes its physical state from that of a conjugated polymer solid film to a gelled state as it is electrochemically doped, without the need of any chemical crosslinking or gelation processes.

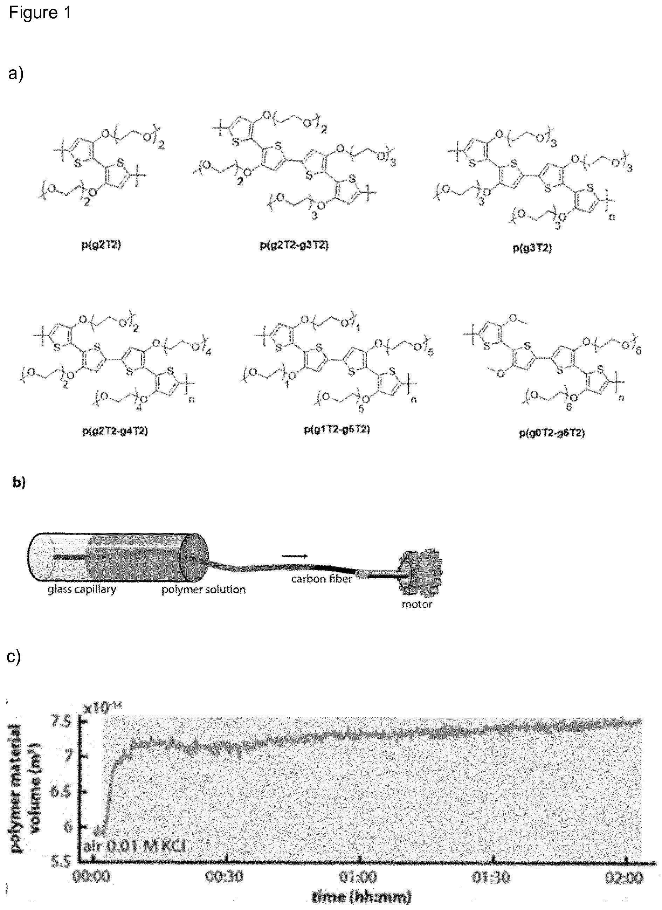

The conducting macromolecular material according to the present device and method, e.g. homo-alkoxybithiophene polymer, p(g3T2) or AG345 polymer (figure 1a), exhibits large volume change during electrochemical switching.

Due to the displayed big expansion of the material, different applications could be considered such as actuators, e.g. artificial muscles, or valves. In the latter case the swelling of the material can stop the flow in for instance a microfluidic channel. Similarly, the volume change might be used to change the pore size in filters, e.g. by partial or full blockage of one or more pores.

Further, the present invention relates to a wide range of applications that are based on the large reversible change of volume of the macromolecular material during electrochemical switching.

### Controlled and tunable porosity in filters, foams, sponges

The conducting macromolecular material of the present device and method exhibits sufficient conductivity both in neutral and doped state that does not require a supporting electrode to address the electrochemical switching. Thus, it can be a free-standing electrode or the material can be coated on both insulating and conducting substrates.

The macromolecular material can be processed from solution and therefore coat any substrate. By coating substrates with porosity such as foams, filters, sponges and paper the porosity can be tuned when the material volume changes during electrochemical switching. The initial thickness of the material coating and the voltage that is applied on the material in respect to an electrolyte will define the swelling or shrinkage of the material and determine the porosity of the porous substrate. The porous substrates can be made from synthetic polymers, both conjugated and non-conjugated polymers, natural polymers such as cellulose and other polysaccharides, metals such as Pt, Au, Al, Ti, and carbon.

Solid state devices can be realized as well, wherein a conducting porous material, or an insulating porous material that is coated with a conductor, is coated with a solid state electrolyte followed by another coating of the swelling conducting macromolecular material of the present invention. When applying a voltage between the conducting substrate and the polymer, the change in volume of the polymer will change the porosity of the porous material.

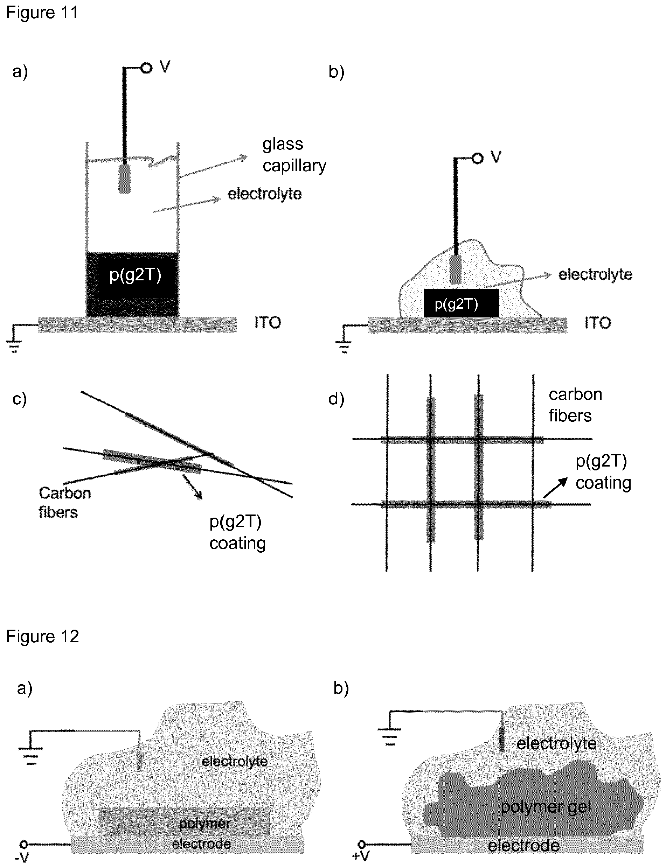

Figure 12 illustrates embodiments of the present invention wherein the state of the conductive macromolecular material changes upon the application of an oxidation voltage. In figure 12a the conductive macromolecular material is illustrated as being in its hygroscopic solid state, having a high young modulus. The conductive macromolecular material is coated onto an electrode and immersed in an electrolyte. Further figure 12b shows the conductive macromolecular material after it is being oxidized. Hence, the conductive macromolecular material is swelling to a gel state, showing hydrophilic and hygroscopic properties and having a low young modulus.

Since the conducting macromolecular material of the present device and method exhibits very large changes in volume it is possible to entrap neutral biomolecules. When the macromolecular material is oxidized in an electrolyte that contains the neutral biomolecules, the volume of the conducting macromolecular material increases so much making it possible for the neutral biomolecules to diffuse within the macromolecular material matrix. By abrupt reduction of the macromolecular material the volume will be reduced very fast so that the biomolecules may not have the time to diffuse out of the macromolecular material matrix and therefore will be entrapped within the macromolecular material. When oxidizing the macromolecular material, the biomolecules can be released. Thus, the macromolecular material of the present invention can be used in the concept for slow release of biomolecules.

### Microfluidic systems -control of flow in microcapillaries

Addressable pixels comprising the swelling conducting macromolecular material of the present device and method can be made within a channel of a microfluidic system. When a voltage is applied to the pixel the material changes in volume. The flow will be tuned on or off according to the change in volume of the polymer pixel and the channel can be blocked completely if the swelled polymer expands and covers the full cross section of the channel.

Figure 11 illustrates embodiments of the present invention; a) p(g3T2) in chloroform filling a fem mm of a glass capillary; b) p(g3T2) in chloroform, a drop cast on Indium tin oxide (ITO); c) and d) carbon fibers coated with p(g3T2).

### Electronic control of separation

Since filters or membranes with tunable porosity can be realized with the conducting macromolecular material of the present devices and methods, these tunable membranes can be used to separate molecules of various sizes. The separation/exclusion will be determined from the porosity of the membrane.

### Electronically addressed drug release

The conducting macromolecular material of the present device and method can be doped by any negatively charged molecule. The macromolecular material initially is in its neutral state and contains no ions. The conducting macromolecular material is immersed in an electrolyte where the negative ions consist of a charged biomolecule such as drugs or peptides or proteins. Further, the macromolecular material is electrochemically oxidized hence the negative biomolecules will enter the macromolecular material matrix and act as the dopants, by compensating the positive charges on the polymer chains. Consequently, the biomolecule can be entrapped within the macromolecular material matrix. Whenever the biomolecule is to be delivered, the macromolecular material is electrochemically reduced and the dopant is released in the locus of interest. The voltage magnitude, the duration of application of the voltage and the voltage swipe rate will define the delivery rate and the delivered amount of the biomolecule.

### Flow switch

During the first oxidation, the volume of the conducting macromolecular material according to the present invention expands several 100% or even 1000% in higher voltages. This huge change in volume can be used as a switch to block a specific space and thus the flow of air, liquid or even solid matter. This large expansion is only observed during the very first oxidation, therefore this switch can be used only once. However, if a full blockage of the space is not required or the space is smaller than the reversible volume change of the macromolecular material, then the switch can be used multiple times. In this case, both solid state devices as well solid state electrolytes are contemplated.

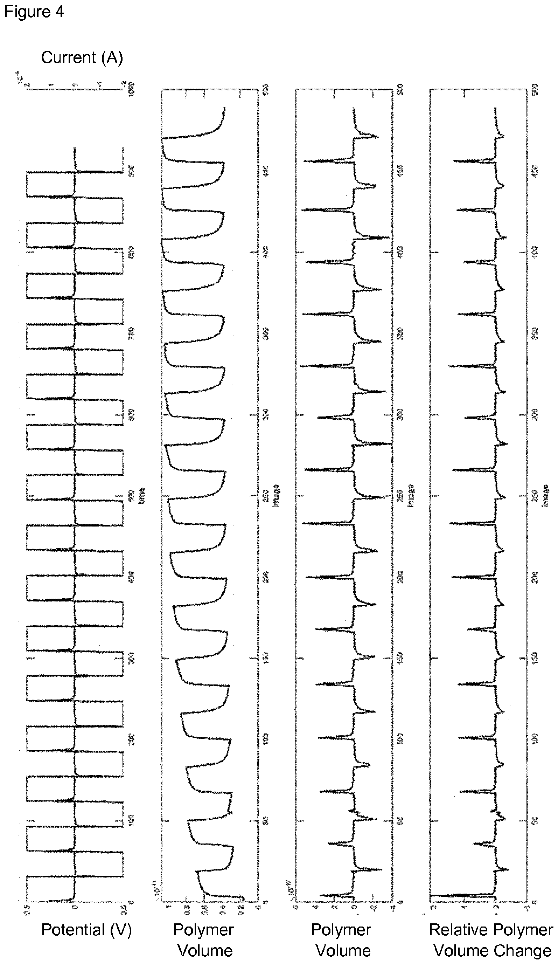

In one further example, the switching speed of a conducting macromolecular material was assessed. Figure 4 illustrates the microscopy results of a section of a polymer fiber between switches 2 and 17 at +/-0.5 V. One image was taken approximately every second. The polymer changed volume initially very fast to then slowly peak. At the applied cycle speed of 30 seconds for every voltage step, the polymer did not reach its maximum volume. However, the majority of the switching was achieved within the first second.

### Experiments

### Coating procedure of a polymer onto a carbon fiber (figure 1b).

Prior to the coating, the fibers were optionally treated with UV Ozone for 15 min. The optionally pretreated fibers were mounted to the shaft of a small motor. The other end of the fiber was inserted into a glass capillary. The polymer was solubilized with Chloroform and fed into the glass capillary. When the polymer was in the capillary, the surface got smaller and the evaporation of the solvent was significantly slower. When the carbon fiber was slowly pulled out of the capillary, the polymer was deposited on the fiber. To achieve a uniform coating around the fiber, the fibers are turned by the electric motor while they are pulled out of the capillary. Also noticed is that the polymer shows a passive swelling behavior when immersed in an electrolyte, which is illustrated in figure 1c with an example of p(g3T2) coated fiber immersed in 0.01 M KCl electrolyte.

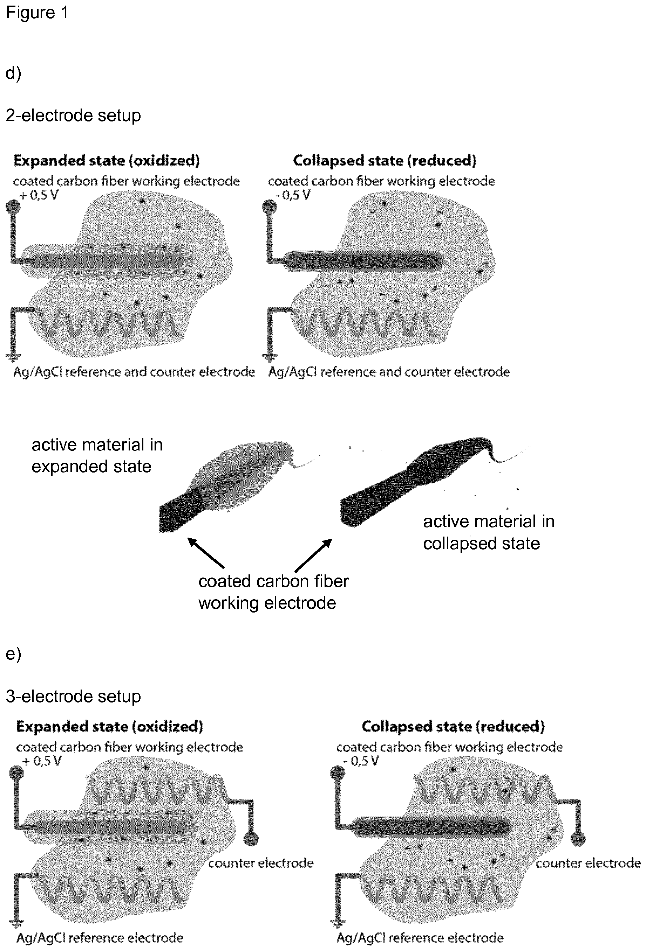

### Experimental setup and methods for recording of the switching mechanism of conducting polymers (figure 1d and 1e).

The coated carbon fibers were mounted with Kapton tape and electrically addressed in a two-electrode setup with an Ag/AgCl pseudo reference-counter electrode (figure 1d) or a three-electrode setup with the same Ag/AgCl reference electrode but with an additional counter electrode (figure 1e). The experiments were performed in 0.01 M KCl solution and a microscope. During the experiments images were recorded with the microscope to be able to determine the polymer volume later.

The electrochemical response during the switching was recorded. The respective charge during the switching was calculated by trapezoidal numerical integration in Matlab. From these values the volume of the ions going in and out of the polymer was calculated.

Images of the full active fiber length were assembled with Adobe Photoshop, the background removed and the active part of the fiber extracted. The images where then loaded in Matlab, transformed to grayscale and the pixels below a grayscale threshold counted. The number of pixels below the threshold allowed for calculation of the average fiber diameter and volume. Individual frames were processed in Matlab based on their grayscale values as well, if possible, without removing the background beforehand. Lengths of particular characteristics were measured with ImageJ.

### Study of conducting macromolecular material coated onto carbon fiber

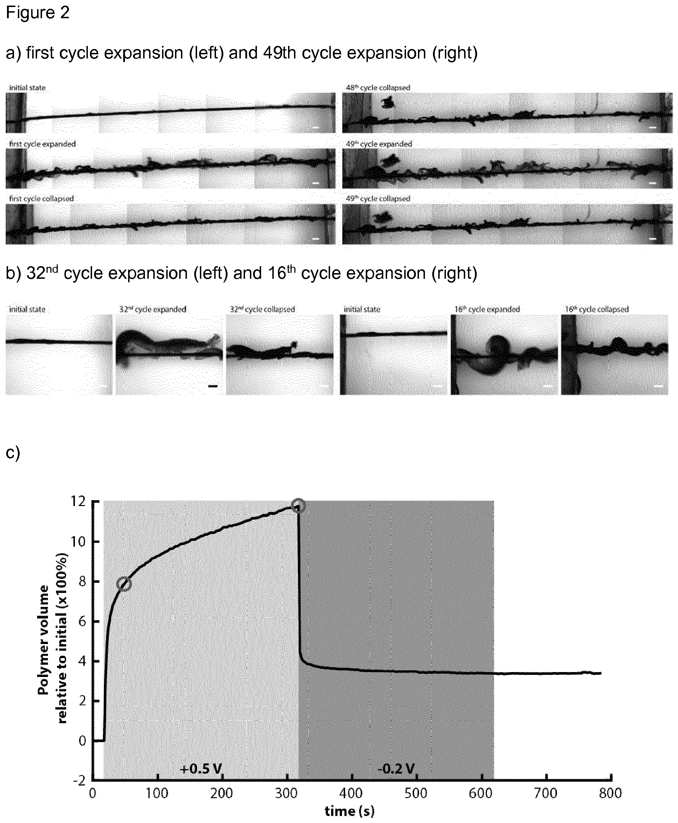

In one example, the swelling ability of a specific example of a conducting macromolecular material, the p(g3T2) polymer, coated on carbon fibers was investigated. In figure 2a, the first oxidation cycle expansion state (left) and 49^{th} oxidation cycle expansion state (right) of the p(g3T2) polymer on carbon fibers; a) top left illustration: initial state; middle left illustration: first oxidation cycle expanded state; bottom left illustration: first reduction cycle contracted state; top right illustration: 48^{th} reduction cycle contracted state; middle right illustration: 49^{th} oxidation cycle expanded state; bottom right illustration: 49^{th} reduction cycle contracted state.

The first cycle was initially quite smooth, the polymer on the carbon fiber swelled quite a lot in the first cycle, especially compared to the material thickness on the carbon fiber. After the first expansion, the polymer did not go into the initial state. In all following cycles the polymer volume basically changed between the two latter states. This means that the relative volume change was less in the following cycles. Then again, the volume change was consistent.

Further, after 48 cycles, the maximum polymer volume observed increased compared to the first cycle. The general observation, that the polymer switches between the previously mentioned states was however consistent. In other words, even after 49 cycles, the polymer behavior was comparable to its behavior at the second cycle.

In a further example, characteristics of the p(g3T2) polymer on carbon fibers was studied (figure 2b). The three illustrations to the left show the polymer in initial state, the expanded state after 32^{nd} oxidation cycle at +0.5 V, and the contracted state after 32^{nd} reduction cycle at -0.5 V. Hence, these characteristics show the expansion of polymer alongside or parallel with the electrode surface. Typically conducting polymers swell predominantly perpendicular to the electrode surface, i.e. here the carbon fiber surface. In contrast, the p(g3T2) seemingly swells in all directions. Further, the three illustrations to the right shows again the polymer in initial state, further the oxidized polymer in expanded state after 16^{th} cycle, and similarly after 16^{th} reduction cycle in its contracted state. This shows the three-dimensional expansion of the polymer and the intrinsic conductivity, since the polymer was not fully attached to the fiber but still swelled a lot in exactly that area.

Figure 2c shows a temporal evolution of the relative volume change of the p(g3T2) polymer in respect to the initial state (before biasing) during oxidation (+0.5 V) and reduction (-0.2 V). Circles indicate values at 30 seconds and 5 minutes. About two thirds of the volume change in the first cycle occurs within the first 30 seconds while the subsequent contraction is faster.

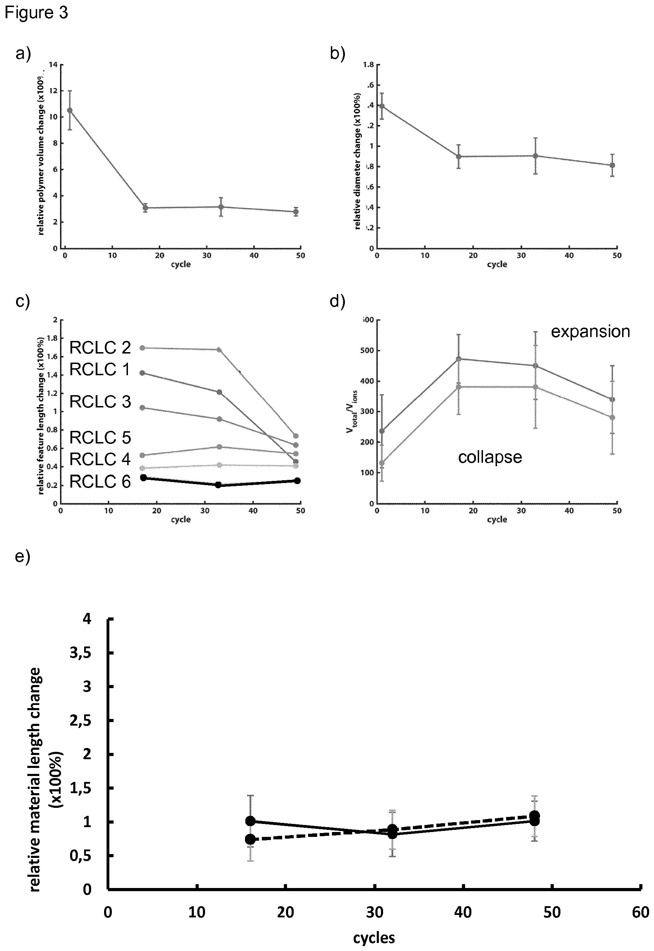

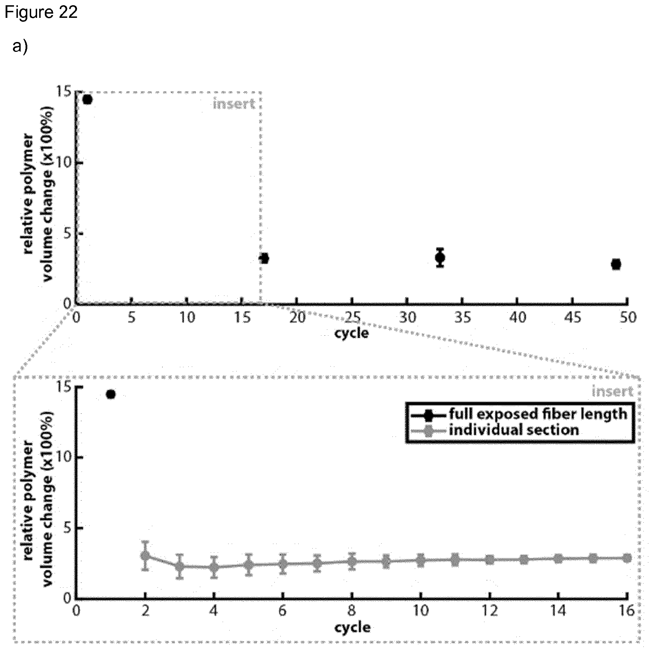

In another example, the relative volume change of the fibers was investigated. The redox voltage was cycled at +/-0.5 V (figure 3a). In the first cycle the relative change was very large, since the expanded state was compared to the initially smooth thin polymer film on the carbon fiber. The relative volume change of the polymer in the expanded state (+0.5V) in respect to the previous contracted state (-0.5V) may be determined as a function of cycle number ΔVₙ/V ^{pol}_{n-1_contr} = (V^{pol}_{n_exp} - V^{pol}_{n-1_contr})/ V^{pol}_{n-1_contr}) (figure 22a). When the polymer is oxidized for the first time at +0.5V, still a major initial relative volumetric expansion of ΔV^{pol}₁/V^{pol}_{0_contr} = 1400% is observed. From the second cycle (n>1) and on, typically, the polymer exhibits reversible ΔVₙ/V^{pol}_{n-1_contr} values in the range from 280% to 330%. In cycles 17, 33 and 49, when the polymer volume changed between the expanded state and the rough contracted state, the relative volume change is about 3 times. This relative expansion was bigger than that of conducting polymers usually show.

In one example, the relative diameter change of the investigated swelling material coated carbon fibers cycled at +/- 0.5 V was investigated (figure 2b). Features that occur within the first cycle can reach up to a few hundred micrometers in length. The actual relative diameter change of the fibers, from which the volume values were calculated, showed relative changes between 1.4 and 1 times. Even though some of the features are barely attached and physically/electronically in contact with the carbon fiber they still demonstrate complete switching. This suggests that the polymer has sufficient electronic conductivity at low degrees of doping to support fast transport and accumulation of holes upon oxidation.

In one embodiment the p(g3T2) material may be used for application as a free-standing combined electrode-actuator material for giant-volume switching applications.

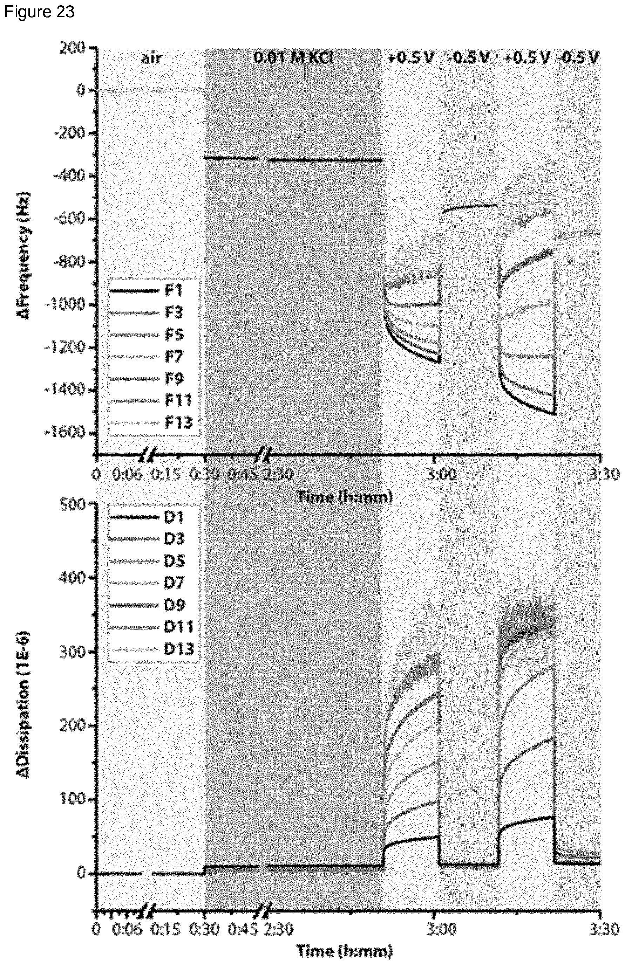

The mechanisms behind the observed record high volume change values of the p(g3T2) material and the hypothesized solid-to-gel (oxidation) and gel-to-solid (reduction) phase transitions, has been confirmed by examining the change in mass and viscoelasticity upon redox-switching using Quartz Crystal Microbalance with dissipation monitoring (QCM-D). Figure 23 shows the frequency and dissipation response to electrochemical switching in 0.01 M KCl (ΔFₙ/n & ΔDₙ/n). When +0.5 V are applied a clear decrease in frequency is observable (figure 23 upper graph). Upon oxidation at +0.5 V, this ΔF₁ₛₜ shifts an additional -700-1000 Hz at the same time as the overtones diverge, which indicates a considerable change in mass and also suggests a major increase in elasticity. A decreased frequency indicates an increased mass change. A mass change likely is caused from water and dopant uptake into the material. While the frequency decreases, the dissipation signal increases (figure 23 lower graph). The shift in the dissipation value reaches 3-10 1E-6 (overtone⁻¹) (all overtones) and 50--250 1E-6 (overtone⁻¹) (1^{st} to 9^{th} overtone), respectively, upon adding the film and then by oxidizing it, respectively. A larger dissipation indicates a less rigid film. For the 11^{th} and 13^{th} overtone the signal is out of range, for both ΔF and ΔD, thus confirming that a very large change in volume and elasticity occurs upon oxidation. However, when p(g3T2) gets reduced back to its neutral state, the initial thin film properties are to a largely recovered. ΔD returns almost entirely to its initial value, which indicates that the film returns to its solid phase. ΔF returns only close to the initial value, probably due to remaining inclusion of electrolyte/water. For the second switching cycle, upon oxidation mass and elasticity increase even further and the subsequent reduction switch generates a p(g3T2) film that includes relatively more electrolyte/water. The very large polymer responses may prevent the fitting of the data with better accuracy.

In one example, the relative changes in length for specific characteristics, which are different formations of the swelling material, parallel to the carbon fiber is illustrated (figure 3c). Since the fibers were initially smooth, no relative characteristic length could be obtained for the first switching cycle. For the Cycles 16 and 32, the relative characteristic length change (RCLC) was comparable to the observed relative diameter change in figure 3b. Individual structures of the material was also studied and how they changed their volume not just perpendicular to the carbon fiber core but also alongside of it (figure 3e). Here the expanded and contracted states of the 32^{nd} redox cycles are being observed in terms of relative average elongation and relative average shrinking, showing that the length also changes approximately one-fold as the polymer is expanding. The expansion of the polymer seemed to occur in all directions, i.e. isotropic. Once again, this is in contrast to other conducting polymers which usually predominantly swell perpendicular to the electrode surface.

In an example, the ratio of the observed volume change and the volume change that can be accounted for by the ions going in and out of the polymer was studied (figure 3d). The polymer seemed to swell two orders of magnitude more than can be explained by the volume of ions entering and leaving the polymer. That implies that the mechanism of swelling might depend on other causes that merely ions entering and leaving.

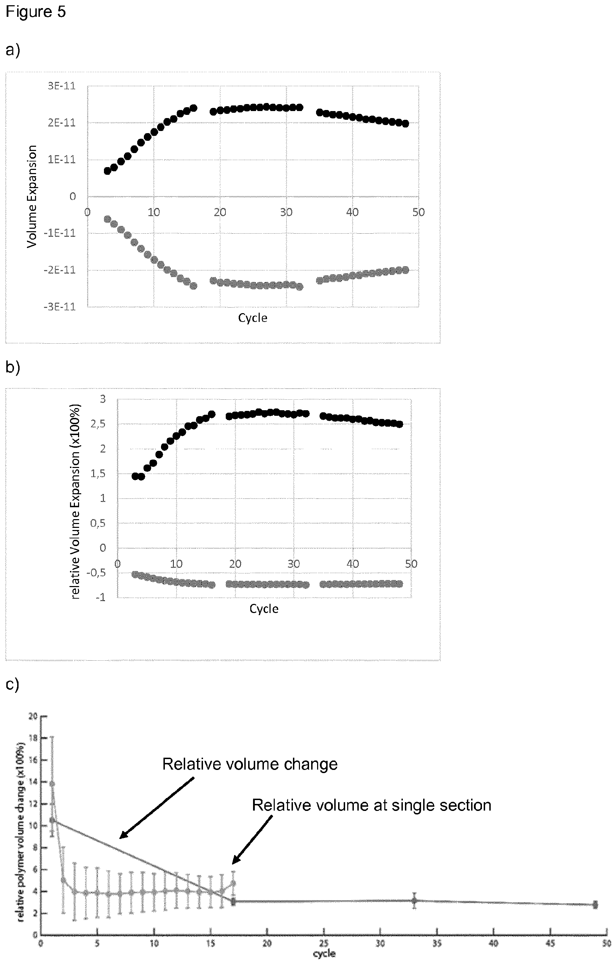

In one example, the volume expansion and the relative volume expansion of a polymer coated fiber in one section was studied with the microscope at +/- 0.5 V, and a voltage switch every 30 seconds. Figure 5a illustrates the volume expansion, wherein the initial cycle is not displayed. The polymers showed a slow expansion with every cycle over the initial 15 cycles. The expansion then faded out to peak after about 30 cycles, when a slow degradation (probably loss of material) was dominant. Further, figure 5b illustrates the relative volume expansion, wherein the relative expansion in the initial steps was observed to increase to a stable level. A similar behavior can be observed in figure 3a. Unlike shown in figure 3a, the relative change was however increasing in the first cycles. This was due to the fact that the relative change in the first cycle was very large.

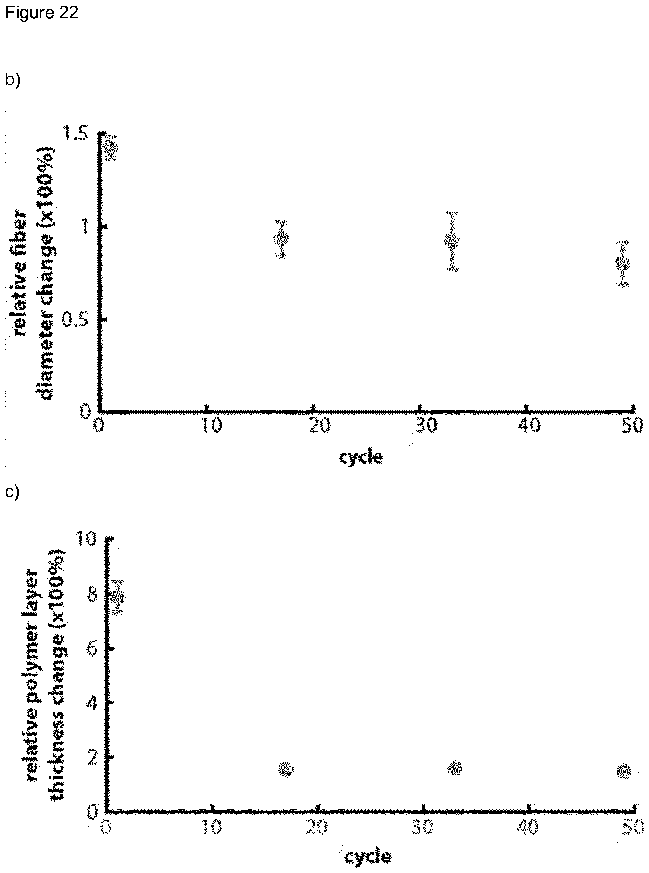

In one example, the relative volume change of the fibers over the first cycles was studied. Data for the frames where the voltage was applied for longer than 30 sec and a full image of the fibers were taken (figure 5c and figure 22). When not just one fiber was considered, the relative volume change behaved similarly for the first 16 cycles. The relative volume change dropped rapidly in the first cycles and then slowly increased.

In one embodiment of the present invention the conjugated p(g3T2) polymer is comprising ethylene glycol side chains, that can be transformed in between a solid state and a gelled state, upon oxidation-reduction switching. Said conjugated p(g3T2) polymer is shaped as a cladding layer around a carbon fiber, the initial application of +0.5 V and +0.8 V, versus Ag/AgCl electrode, makes p(g3T2) to gel and swell 14 and 120 times, respectively, with respect to its pristine thin film state. For consecutive switching at +/-0.5 V the material typically exhibits a reversible swelling of 300%, when referring to its previous contracted state. The electronic control over volume of p(g3T2) thus outperforms prior reports on conjugated polymer systems commonly explored for actuators, such as PPy.

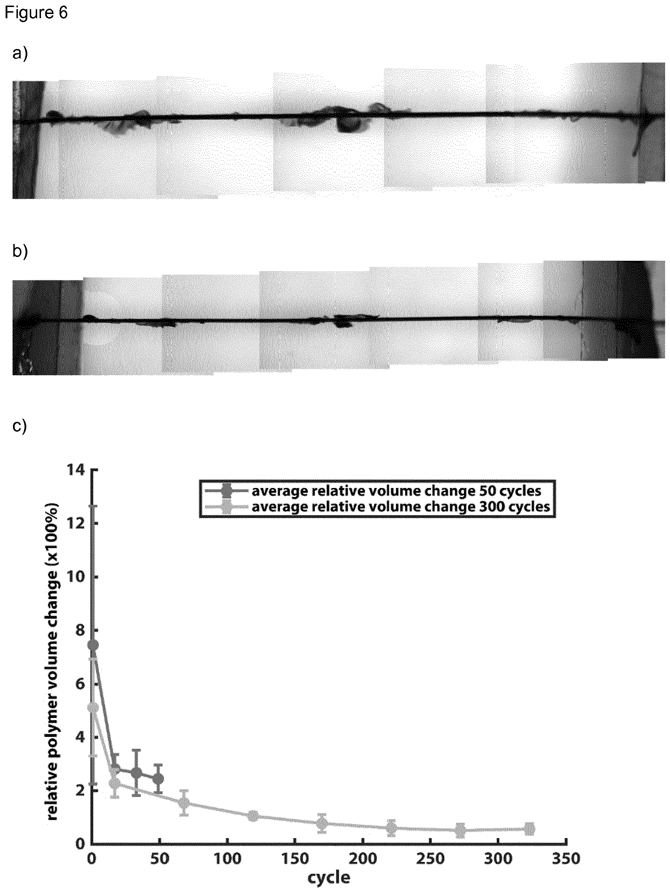

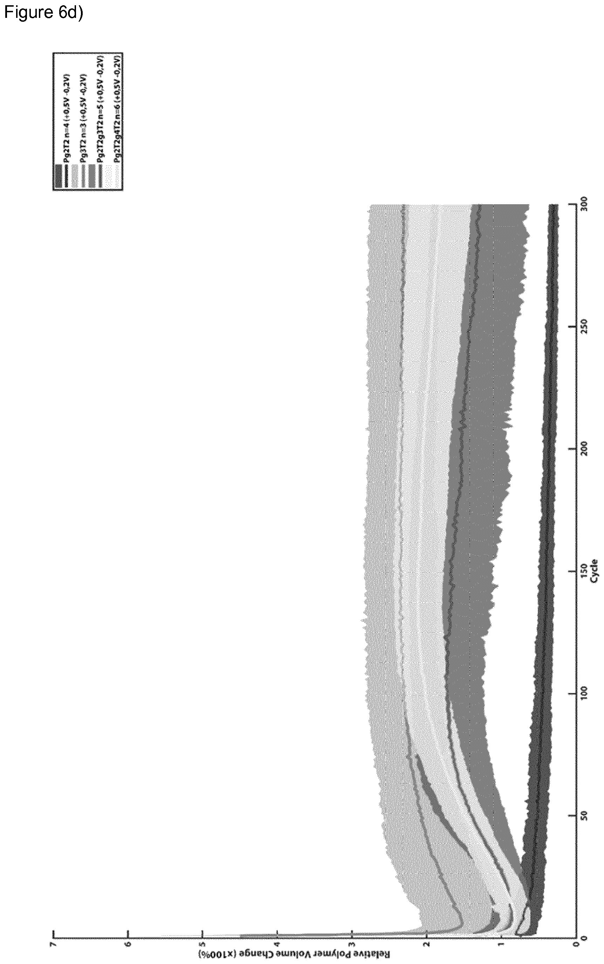

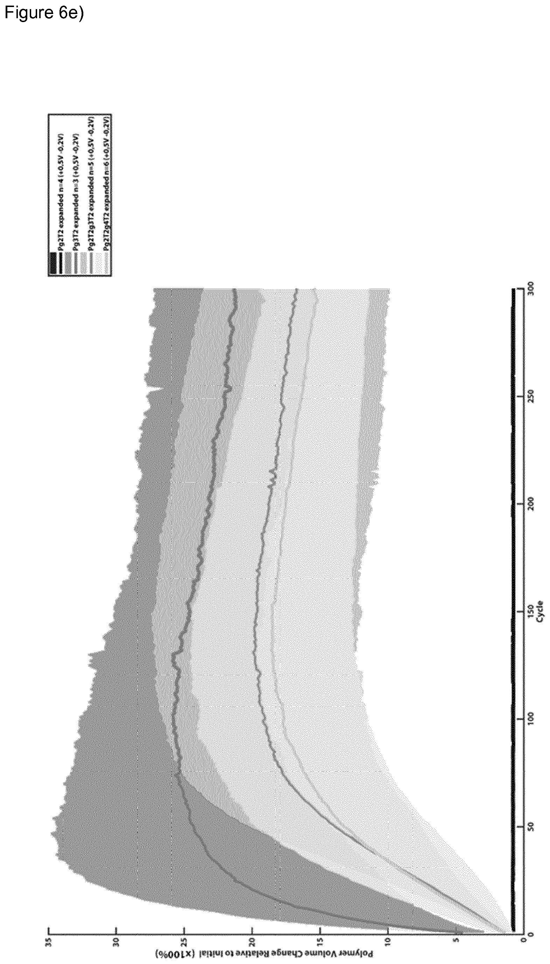

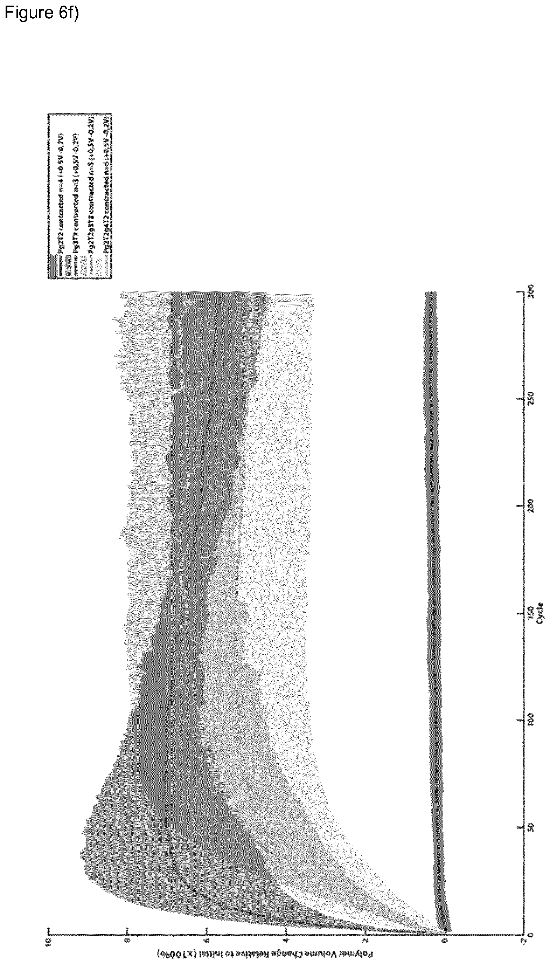

The long-term stability of the polymer was also investigated over 300 cycles. Figure 6a illustrates a polymer coated carbon fiber at 16^{th} cycle and the corresponding polymer coated carbon fiber at 312^{th} cycle is shown in figure 6b. In initial experiments, the relative switching was very small after more than 300 cycles and not much material was left on the fiber surfaces. Figure 6c illustrated the relative volume change over 300 cycles compared to previously determined volume change for 50 cycles fibers. Hence, the relative changes were smaller. However, the general trend of the two curves was comparable. Over time material was lost from the electrode surface, perhaps because the polymer was not covalently bound to the surface and the forces when the polymer expanded exceeded the strength of the interaction between polymer and carbon fiber. However, experiments under optimized conditions (figure 6d) show that the polymer change varies within the first, approximately between 50 and 100, cycles, while in the following cycles the polymer shows a stable relative volume change. All polymers show a slow decay in the relative volume change switching capabilities over the 300 cycles tested. Similarly, figures 6e and 6f show the relative volume change in the expanded states relative to the initial state and the relative volume change in the contracted states respectively. Like for the CV experiments, the polymer with the shortest average side chain length p(g2T2) shows the smallest volume change capabilities. However, in contrast to the CV experiments (figures 1h-k), p(g3T2) seems to exhibit a bigger relative volume change than p(g2T2-g4T2) in this case, according p(g2T2) (avg. 2) < p(g2T2-g3T2) (avg. 2.5) < p(g2T2-g4T2) (avg. 3) < p(g3T2) (avg. 3), compared to the CV experiments for the conjugated polymers. In the CV experiments, among the tested polymers those with a longer average side chain length seem to exhibit a higher volume expansion than those with in average shorter polymer side chains e.g. p(g2T2) (avg. 2) < p(g2T2-g3T2) (avg. 2.5) < p(g3T2) (avg. 3) < p(g2T2-g4T2) (avg. 3). Further, according to the CV experiments the polymers differ in terms of the total volume expansion as well as the potential (voltage) range where the volume change occurs. Most of the volume change is happening within a voltage range between +0.5 V and -0.2 V, hence going down all the way to -0.5 V is not necessary. Furthermore, the overall polymer expansion is larger when higher voltages are applied (0.8 V instead of 0.5 V). Similar to the narrower investigated voltage range, it is not necessary to go down to -0.8 V for a sufficient contraction of the materials, in fact at -0.2 V the majority of the contraction has happened.

### Study of swelling properties of device comprising conducting macromolecular material

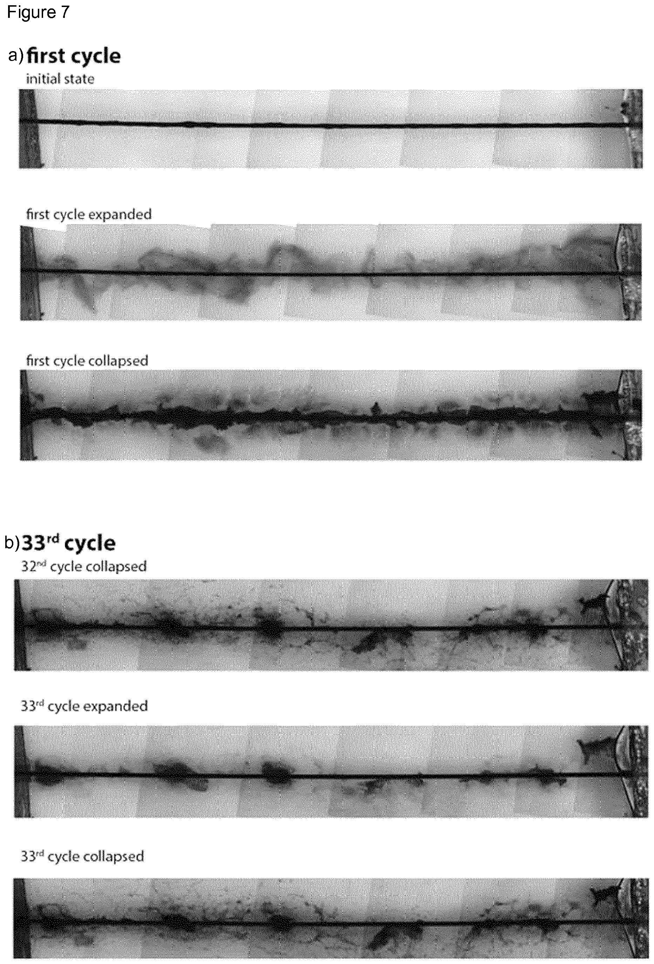

In another example, the swelling of the polymer at 0.8 V was investigated. The top three illustrations in figure 7a show the polymer in its initial state, the polymer in expanded state after the first oxidation cycle, and the polymer in contracted state after the first reduction cycle. Similarly, the bottom three illustrations in figure 7b show the polymer in contracted state after 32^{nd} reduction cycle, the polymer in expanded state after 33^{rd} oxidation cycle, and the polymer in contracted state after the 33^{rd} reduction cycle. The volume change of the polymer was much bigger when 0.8 V was applied, compared to when using 0.5 V. The polymer however worn out much faster. The initial volume change compared to the smooth material on the carbon fiber was very big (see figures 5 and 7). Similar to the experiments at 0.5 V the polymer did not collapse back into its initial state, this may be seen as a halo appears outside the material coating the wire in the bottom illustration of figure 7a. At the first collapse, the halo occurred, indicating that there was polymer material that was not part of the complex matrix. As can be seen in the bottom three illustrations for cycle 33 (see figure 7b), the halo was still connected to the polymer and could be reduced and oxidized, as indicated by the respective color (not displayed in figure 7). Since the polymer did not stick to a compact polymer matrix, but the halo was part of the active polymer, it is difficult to determine by means of microscopy how much polymer is actually there. The change in the color of the polymer halo shows that the polymer is conducting over large distances. Since the material is electrochromic, the color changes when the oxidation state of the material is changed. After 33 cycles a large amount of the polymer was not in a confined state but large areas of polymer halos could be observed. That means the switching at 0.8 V in this specific example was not sustainable.

The polymer halo could potentially lead to suspicions of the expansion effect that cannot be explained by the ion volume. This might be due to change of hydrophobic/hydrophilic properties of the polymer material. As the polymer expands a lot, the PEG side chains might be exposed differently to the solution and consequently PEG, which in itself is quite hydrophilic, thereby opening up for the possibility of forming a solvation shell.

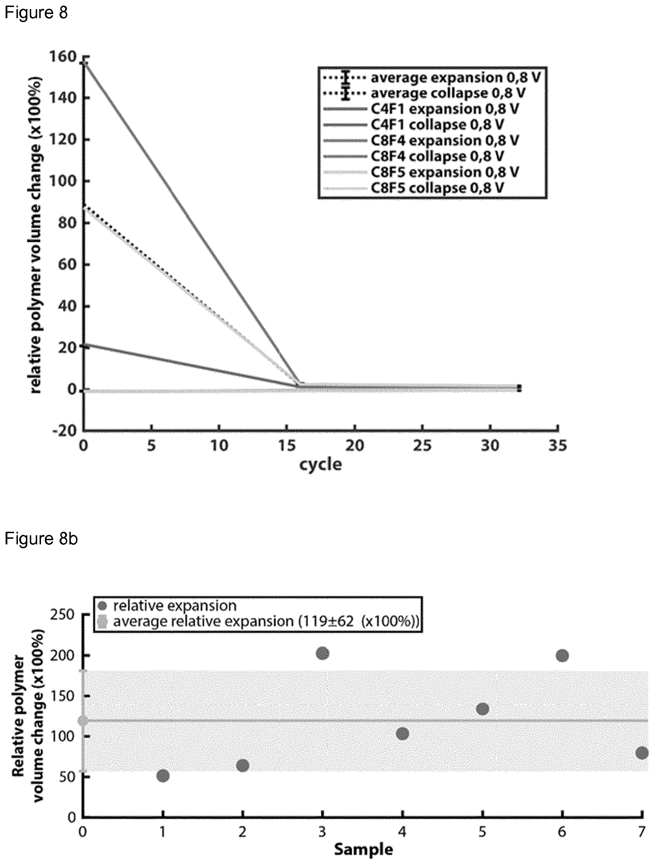

In another example, the relative volume changes of the polymer were investigated when a voltage of 0.8 V was applied (figure 8). The observed relative changes for 0.8 V were 2 to 20 times greater than for the observations at 0.5 V. In this example, this behavior was however not sustainable. For 16 and 33 cycles, the polymer showed a significantly smaller relative switching and in the illustrations in figure 7, a strong loss of the polymer can be observed. The loss of polymer material could probably explain the reduced relative switching to a large extent.

In embodiments, the average relative polymer volume change of the first cycle ΔV₁/ V^{pol}_{0_contr} reaches about 12000% (n=7). After being oxidized at 0,8 V, and when the polymer then is reduced (at -0.8 V) it contracts in a slightly non-homogenous fashion. Parts of the cladding layer remain in its expanded state and appear as a diffused polymer network loosely confined around the central fiber, while other parts of the cladding seem to contract (Figures 7a-b). After about 33 cycles, most of the material seems to be in the loosely confined state and only a small amount of cladding is still contracting. Repeated doping and de-doping at 0.8 V, versus the counter electrode, is at the limit of the polymer's electrochemical window (Figures 1f-g).

### Method for voltage dependent pore size variation in a p(g2T) i.e p(g3T2) coated carbon sponge (figure 9a).

The polymer was dropcasted on a carbon sponge and dried overnight prior use. The sponge was attached to a DropSense 110 carbon electrode by carbon paste. The investigations were performed in a PDMS well containing 0.01 M KCl. The preciously described two-electrode setup was used, with an Ag/AgCl pseudo reference serving as reference and counter electrode combined. Voltages of +/- 0.8 V were applied.

Figure 9b further shows the coated carbon mesh in contracted state, whereas figure 9c shows the coated carbon mesh in expanded state. Further figure 9d close up of the pores in b) and c) in open state, and figure 9e shows the pores in closed state. When a voltage was applied, the polymer expanded, and the pores closed. This indicates that a change in pore size for filter applications might be feasible with the material. Other characteristics of a coated carbon sponge is shown in figures 9f and 9g, wherein firstly a bubble is entrapped in the sponge in figure 9f and secondly the bubble is pushed out of the mesh when the polymer is expanded, shown in figure 9g.

One embodiment of the present invention relates to an electro-active filter or sponge device, of which the size of the pores can be controlled electrically (figure 9). The surface of a carbon sponge, with the average pore size of 250 µm, is coated with a cladding of the p(g3T2) polymer. During oxidation (+0.5 V) the polymer expands and the pores of the resulting filter sponge become smaller, thus reducing the initial porosity of the sponge by 85%, as recorded after the 3rd switching cycle (figure 9k). Depending on the size of the pore and the thickness of the initial coating the pores either close completely or partially (figures 9h and 9i). Further, figure 9j shows that the porosity can be reversibly modulated by about 60% in three subsequent cycles, the figure showing the initial state (open 100%), the closed p(g3T2) expanded state and the open p(g3T2) contracted state. Hence, the p(g3T2) polymer displays a potential practical implication, by the electronic control over the porosity via electrochemical doping of an electro-active material. Moreover, as the conducting macromolecular material of the present invention supports sufficient intrinsic conductivity, the material can potentially also be applied to non-conductive substrates.

### Study of conducting macromolecular material as free standing electrode

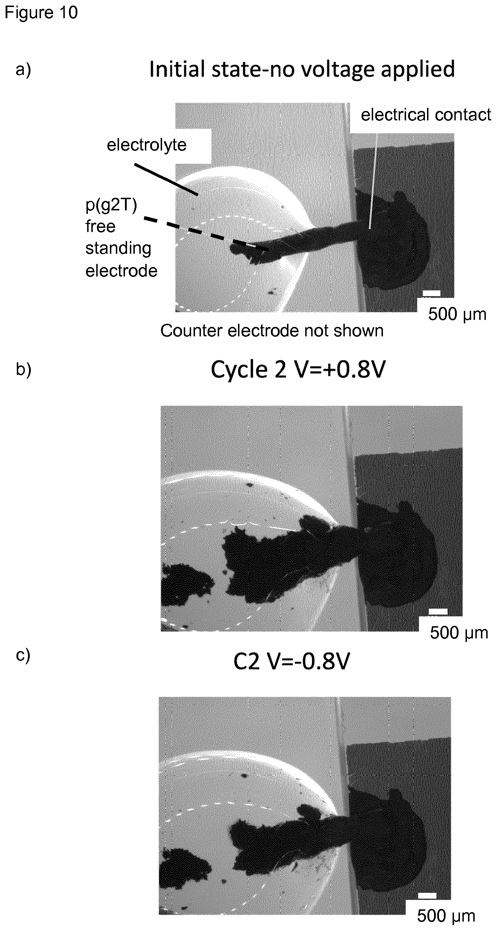

In one example, a free standing electrode is prepared as shown in figure 10, wherein figure 10a shows the initial state contracted state of the material, when no voltage is applied. Further in figure 10b the material, in this case the p(g2T) i.e. p(g3T2) polymer, is first in its oxidized expanded state at +0.8 V after two oxidation cycles and in its reduced contracted state at -0.8 V after two reduction cycles, shown in figure 10c. The p(g3T2) polymer can change in volume as a free standing electrode without a supporting electrode. The free standing electrode can have several mm length.

### Molecular dynamics calculations

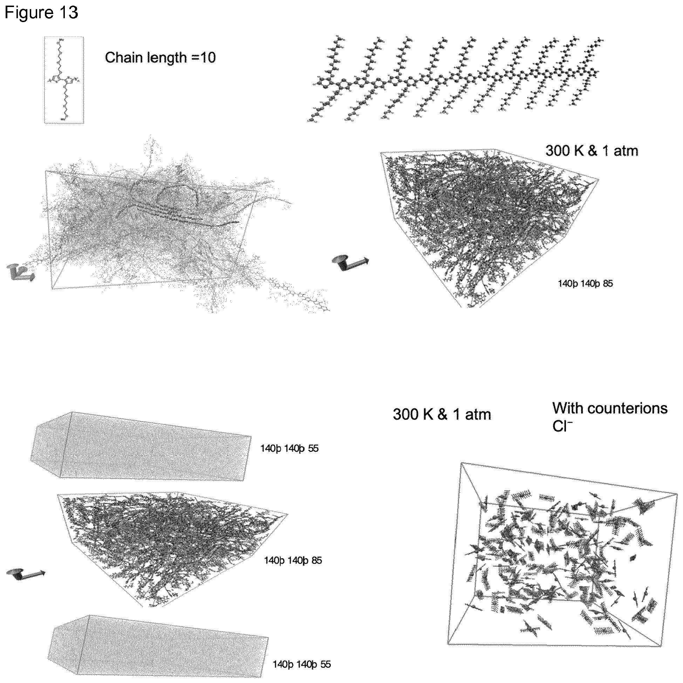

Molecular dynamics calculations were performed to understand the swelling of the material during electrochemical switching as shown in figure 13 which illustrates the molecular dynamics system set-up.

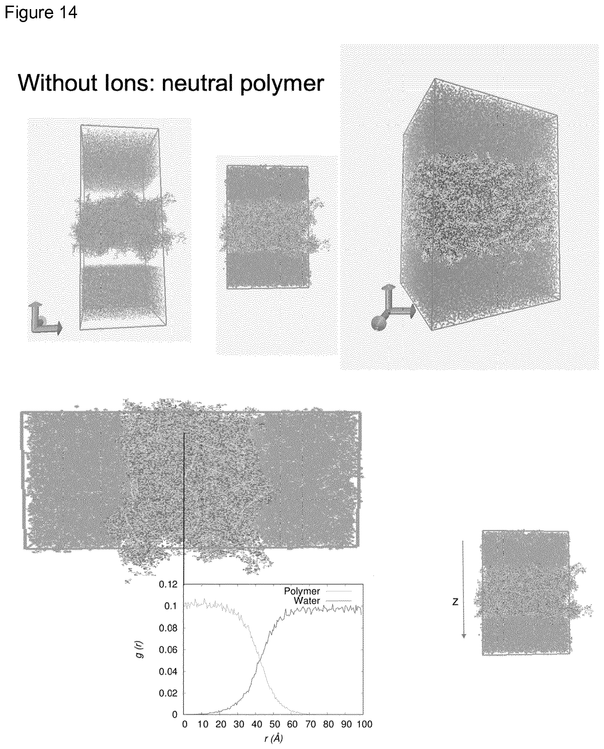

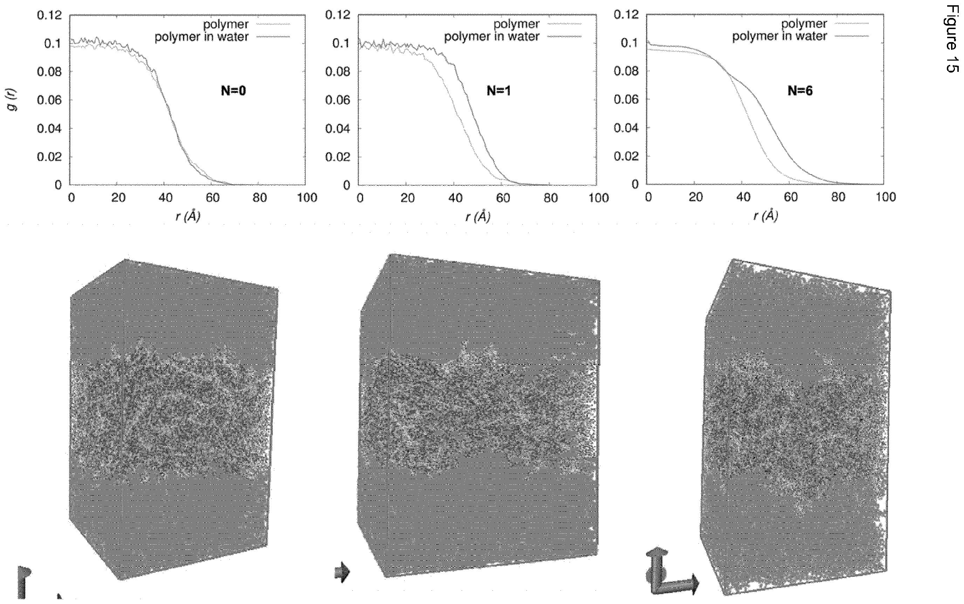

Further, figure 14 shows the molecular dynamics system set-up at the start of the experiment. Initially the uptake of water on a neutral polymer was studied and no ions were present in the water. The polymer did not swell. Then the polymer film was charged and ions were added within the film in order to compensate the charged chains. In the surrounding water no ions were present. The swelling of the polymer was studied in different oxidations states of the polymer, n= charge per chain which is showed in figure 15. By increasing the charge on the polymer chains the film did swell, but very little.

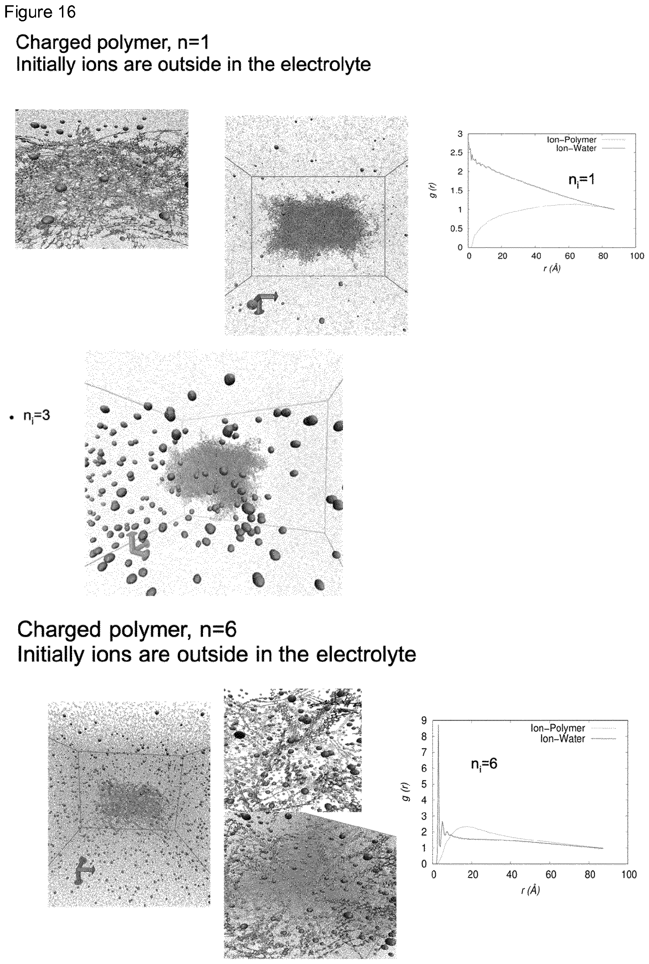

Furthermore, a change in the system was promoted in order to better simulate the experiment. Hence, the polymer chains were charged but instead the ions were added in the surrounding electrolyte. Thus, when running the calculations, a recording of ions entering the film along with water resulting in swelling of the film. As the number of charges increased along the chains, a larger swelling of the charged polymer with ions in the electrolyte was observed, as showed in figure 16.

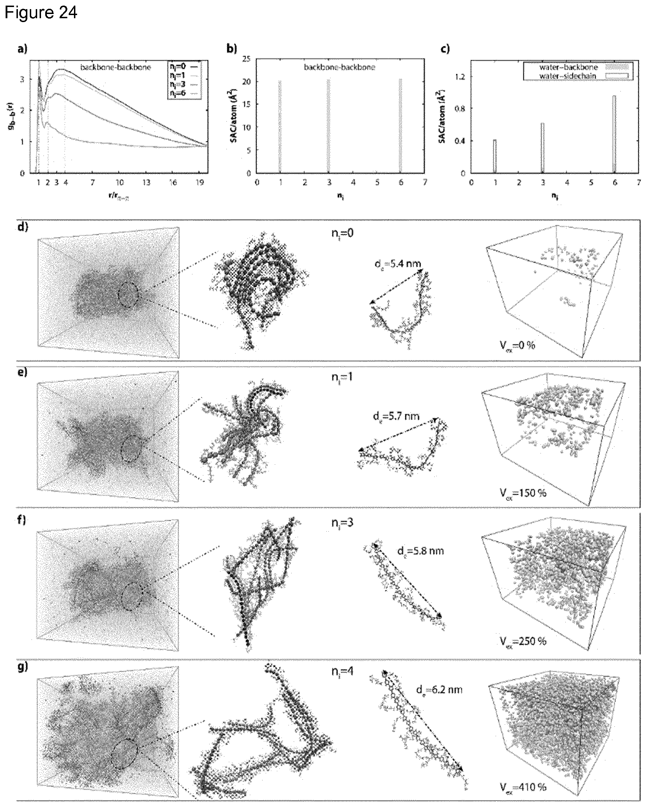

Figure 24 summarizes the key findings of the extended molecular dynamics simulations of polymer swelling and water intake, with a) Radial distribution of backbones g_{b-b}(r) as a function of the distance between the center of the mass of the backbones, b) the calculated surface area of a contact per atom between backbones of the polymer chains, c) the surface area of a contact per atom in Å² for water and backbones and water and side chains and d-g) the system from the molecular dynamics calculation for different oxidized states nᵢ=0, 1,3,6 ((d), (e), (f),(g) respectively, where the first column shows the whole simulation box, the second column shows a bunch of polymer chains the third column individual polymer chains and the fourth column shows the void volume inside the polymer matrix which also represent the water molecules inside the polymer where *V*ₑₓ represent the percentage of volume expansion.

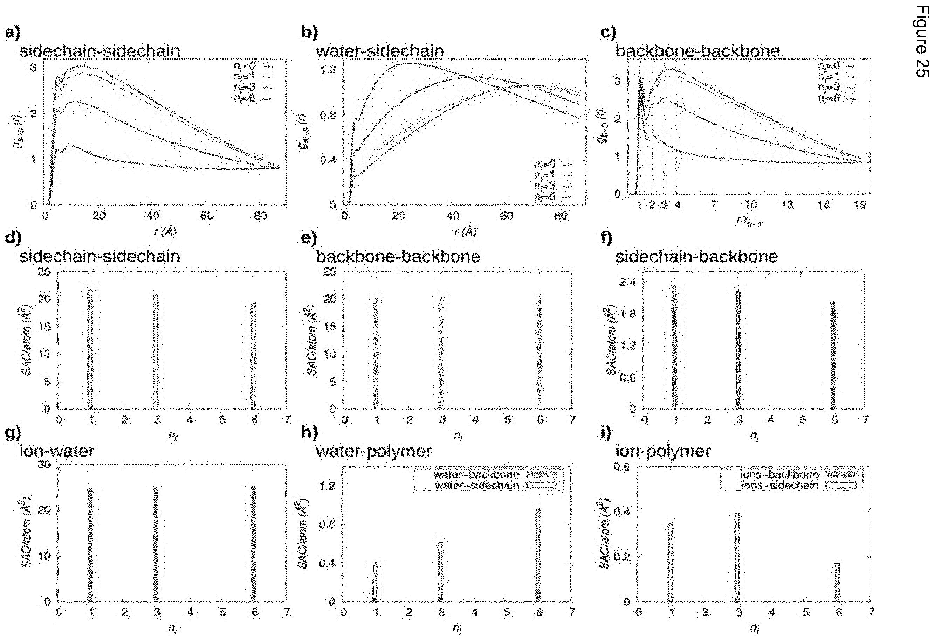

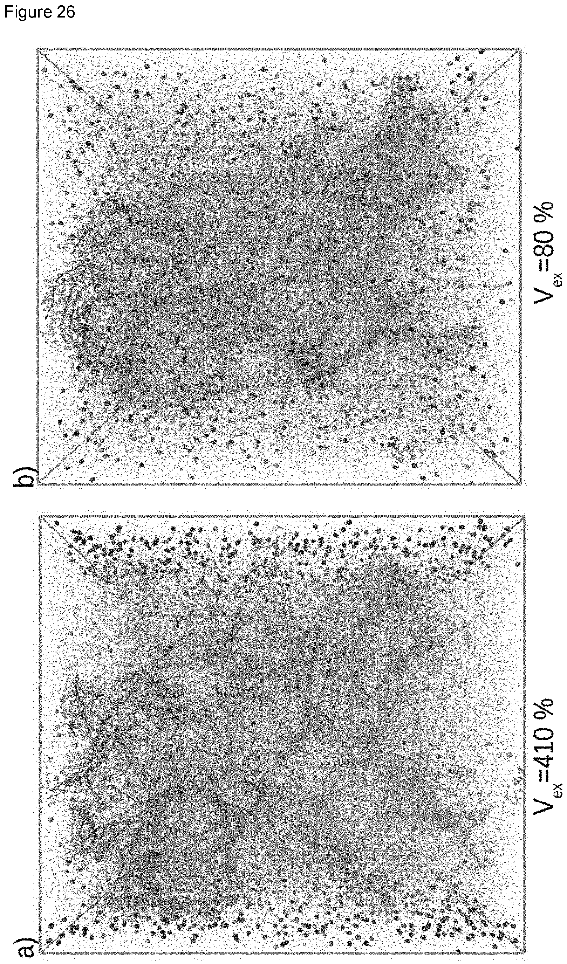

Further, figure 25 illustrates interactions between the components of the molecular dynamics simulation with radial distribution functions (g(r)) as a function of r of a) sidechains, b) sidechains from water molecules and c) of backbones (r_{π-π} = 0.39 nm defines the π-π stacking distance of the backbone) and d-i) surface areas of contact per atom between different elements (in Å²). In addition, figure 26 illustrates molecular dynamics simulations of the de-swelling (contraction) of the polymer. Hence, when the polymer is reduced back to its neutral state in the second part of the voltammetry cycle, the material contracts in the molecular dynamics simulation similarly to the experimental observations (figure 26a, nᵢ=6, shows fully oxidized state and figure 26b, nᵢ=0, shows fully reduced state). Here *V*ₑₓ represent the percentage of volume expansion in comparison to the initial dry film. The material does not go back into its initial state though. This is attributed to the persistence of swelling of the neutral state at the end of the first cycle to the presence of the water inside the polymer, which cannot be completely removed from the film in the course of the voltammetry cycle.

## Claims

1. Device comprising a first electrode, a second electrode, and a liquid electrolyte, wherein said first and second electrodes are arranged within said liquid electrolyte and are arranged to apply an electric voltage to said electrodes, and further wherein said first electrode comprises a conducting macromolecular material that is transferrable from a first state to a second state upon electrochemical switching in dependence upon said voltage applied between said electrodes, and wherein said material when present in said second state has a volume of at least 2.5 of the volume of said material in said first state, wherein said conducting macromolecular material is a conjugated polymer and said polymer has a hydrophobic backbone with hydrophilic sidechains, and wherein said conjugated polymer is selected from the group consisting of p(g2T2), p(g2T2-g3T2), p(g3T2), p(g2T2-g4T2), p(g1T2-g5T2), and p(g0T2-g6T2) according to the chemical structures 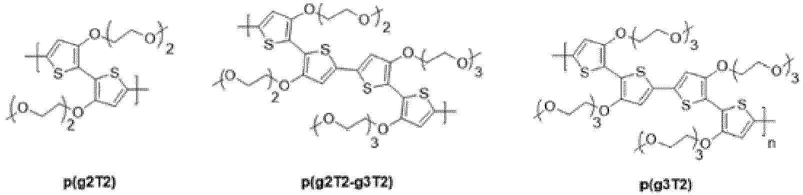 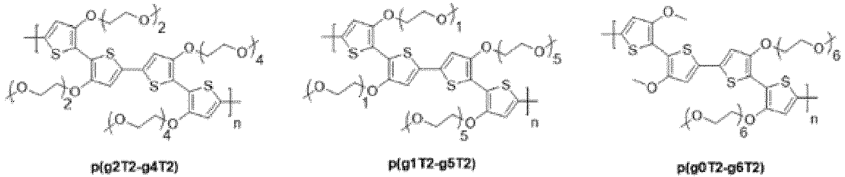 wherein the macromolecular material has a molecular weight above 1000 Da.

2. The device according to claim 1, wherein said conducting macromolecular material is coated onto said first electrode.

3. The device according to claim 1 or 2, wherein said first electrode comprises an electrically conducting or insulating substrate.

4. The device according to claim 1, wherein said first electrode consists of said conducting macromolecular material.

5. Method for electrically controlling the volume of a conducting macromolecular material, the method comprising:
applying an electric voltage between a first and second electrode being arranged within a liquid electrolyte, said first electrode comprising a conducting macromolecular material, said applied voltage transferring said material from a first state to a second state, wherein said material in said second state has a volume of at least 2.5 of the volume of said material in said first state, wherein said conducting macromolecular material is a conjugated polymer and said polymer has a hydrophobic backbone with hydrophilic sidechains, and wherein said conjugated polymer is selected from the group consisting of p(g2T2), p(g2T2-g3T2), p(g3T2), p(g2T2-g4T2), p(g1T2-g5T2), and p(g0T2-g6T2) according to the chemical structures 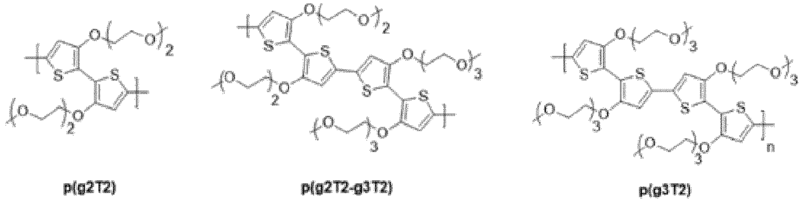 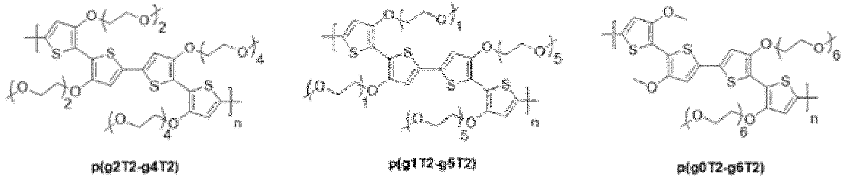 wherein the macromolecular material has a molecular weight above 1000 Da.

6. The method according to claim 5, wherein said conducting macromolecular material is coated onto said first electrode, said first electrode optionally being an electrically conducting solid or porous substrate, or an insulating solid or porous substrate.

7. The method according to claim 5, wherein said first electrode is a conducting porous or insulating porous substrate coated with said conducting macromolecular material, such that said transferring of said material from a first state to a second state alters the porosity of said first electrode.

8. The method according to claim 6 or 7, wherein said conducting porous substrate, is selected from the group consisting of carbon fibers, carbon foams, carbon sponges, metal meshes, metal fibers, metal foams, and metal sponges.

9. The method according to any one of claims 5-8, wherein the voltage is applied in the range of from -1.0 V to +1.0 V, such as in the range of from 0.8 V to 0.8 V, or in the range of from -0.5 V to +0.5 V.

10. The method according to any one of claims 5-9, further comprising reducing said applied voltage, thereby transferring said material from said second state back to said first state in which the material has a lower volume, and wherein the material in said second state has a volume that is between 2.5-3.5 of the volume in said first state.

11. The method according to any one of claims 5-9, wherein said transferring said material from a first state to a second state is irreversible, and wherein the material in said second state has a volume that is at least 2.5 of the volume of said material in said first state.

12. Device according to any one of claims 1-4, or method according to any one of claims 5-11, wherein in said first state, the conducting macromolecular material is in solid form.

13. Device according to any one of claims 1-4 or 12, or method according to any one of claims 5-11, wherein in said second state, the conducting macromolecular material is in gel phase.

14. Hydrogel comprising a conducting macromolecular material comprising a conducting polymer of homo-alkoxybithiophene polymer selected from the group consisting of p(g2T2), p(g2T2-g3T2), p(g3T2), p(g2T2-g4T2), p(g1T2-g5T2), and p(g0T2-g6T2) according to the chemical structures 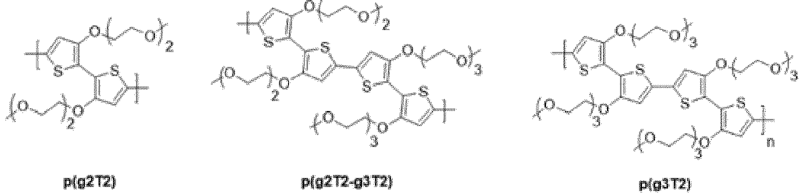 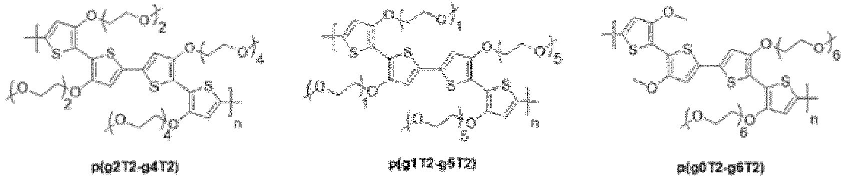 wherein the macromolecular material has a molecular weight above 1000 Da, an aqueous solution and ions, wherein the redox state of said homo-alkoxybithiophene polymer is in its oxidized state.

## Patentansprüche

1. Vorrichtung, umfassend eine erste Elektrode, eine zweite Elektrode und einen flüssigen Elektrolyt, wobei die erste und die zweite Elektrode innerhalb des flüssigen Elektrolyts angeordnet sind und angeordnet sind, um eine elektrische Spannung an die Elektroden anzulegen, und wobei ferner die erste Elektrode ein leitfähiges makromolekulares Material umfasst, das durch elektrochemisches Schalten abhängig von der zwischen den Elektroden angelegten Spannung von einem ersten Zustand in einen zweiten Zustand umschaltbar ist, und wobei das Material, wenn in dem zweiten Zustand vorliegend, ein Volumen von wenigstens 2,5 des Volumens des Materials in dem ersten Zustand aufweist, wobei das leitfähige makromolekulare Material ein konjugiertes Polymer ist und das Polymer ein hydrophobes Gerüst mit hydrophilen Seitenketten aufweist und wobei das konjugierte Polymer ausgewählt ist aus der Gruppe bestehend aus p(g2T2), p(g2T2-g3T2), p(g3T2), p(g2T2-g4T2), p(g1T2-g5T2) und p(g0T2-g6T2) gemäß den chemischen Strukturen 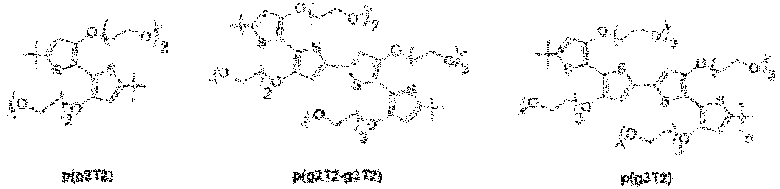 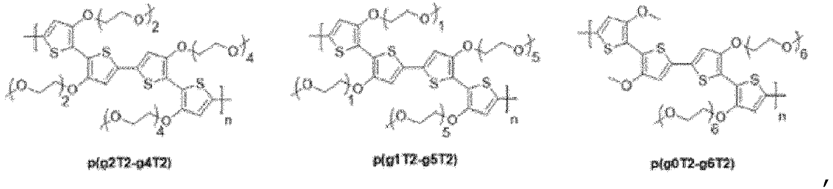 wobei das makromolekulare Material ein Molekulargewicht von über 1000 Da aufweist.

2. Vorrichtung gemäß Anspruch 1, wobei das leitfähige makromolekulare Material auf die erste Elektrode geschichtet ist.

3. Vorrichtung gemäß Anspruch 1 oder 2, wobei die erste Elektrode ein elektrisch leitfähiges oder isolierendes Substrat umfasst.

4. Vorrichtung gemäß Anspruch 1, wobei die erste Elektrode aus dem leitfähigen makromolekularen Material besteht.

5. Verfahren zum elektrischen Steuern des Volumens eines leitfähigen makromolekularen Materials, wobei das Verfahren umfasst:
Anlegen einer elektrischen Spannung zwischen einer ersten und einer zweiten Elektrode, die in einem flüssigen Elektrolyt angeordnet sind, wobei die erste Elektrode ein leitfähiges makromolekulares Material umfasst, die angelegte Spannung das Material von einem ersten Zustand in einen zweiten Zustand überführt, wobei das Material in dem zweiten Zustand ein Volumen von wenigstens 2,5 des Volumens des Materials in dem ersten Zustand aufweist, wobei das leitfähige makromolekulare Material ein konjugiertes Polymer ist und das Polymer ein hydrophobes Gerüst mit hydrophilen Seitenketten aufweist und wobei das konjugierte Polymer ausgewählt ist aus der Gruppe bestehend aus p(g2T2), p(g2T2-g3T2), p(g3T2), p(g2T2-g4T2), p(g1T2-g5T2) und p(g0T2-g6T2) gemäß den chemischen Strukturen 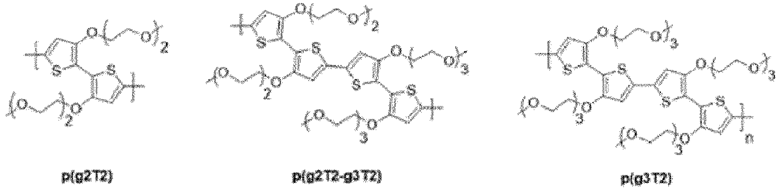 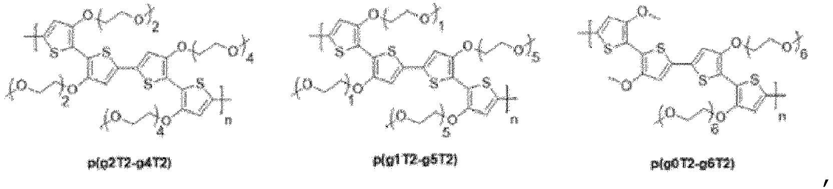 wobei das makromolekulare Material ein Molekulargewicht von über 1000 Da aufweist.

6. Verfahren gemäß Anspruch 5, wobei das leitfähige makromolekulare Material auf die erste Elektrode geschichtet ist, wobei die erste Elektrode gegebenenfalls ein elektrisch leitfähiges festes oder poröses Substrat oder ein isolierendes festes oder poröses Substrat ist.

7. Verfahren gemäß Anspruch 5, wobei die erste Elektrode ein leitfähiges poröses oder isolierendes poröses Substrat ist, das mit dem leitfähigen makromolekularen Material beschichtet ist, so dass das Überführen des Materials von einem ersten Zustand in einen zweiten Zustand die Porosität der ersten Elektrode verändert.

8. Verfahren gemäß Anspruch 6 oder 7, wobei das leitfähige poröse Substrat ausgewählt ist aus der Gruppe bestehend aus Kohlenstofffasern, Kohlenstoffschäumen, Kohlenstoffschwämmen, Metallnetzen, Metallfasern, Metallschäumen und Metallschwämmen.

9. Verfahren gemäß einem der Ansprüche 5-8, wobei die Spannung in dem Bereich von -1,0 V bis +1,0 V, wie z.B. in dem Bereich von 0,8 V bis 0,8 V oder in dem Bereich von -0,5 V bis +0,5 V, angelegt wird.

10. Verfahren gemäß einem der Ansprüche 5-9, ferner umfassend Verringern der angelegten Spannung, um das Material von dem zweiten Zustand zurück in den ersten Zustand zu überführen, in dem das Material ein geringeres Volumen aufweist, und wobei das Material in dem zweiten Zustand ein Volumen aufweist, das zwischen 2,5 und 3,5 des Volumens in dem ersten Zustand beträgt.

11. Verfahren gemäß einem der Ansprüche 5-9, wobei das Überführen des Materials von einem ersten Zustand in einen zweiten Zustand irreversibel ist und wobei das Material in dem zweiten Zustand ein Volumen aufweist, das wenigstens 2,5 des Volumens des Materials in dem ersten Zustand beträgt.

12. Vorrichtung gemäß einem der Ansprüche 1-4 oder Verfahren gemäß einem der Ansprüche 5-11, wobei das leitfähige makromolekulare Material in dem ersten Zustand in fester Form vorliegt.

13. Vorrichtung gemäß einem der Ansprüche 1-4 oder 12 oder Verfahren gemäß einem der Ansprüche 5-11, wobei das leitfähige makromolekulare Material in dem zweiten Zustand in Gelphase vorliegt.

14. Hydrogel, umfassend ein leitfähiges makromolekulares Material, das ein leitfähiges Polymer von Alkoxybithiophen-Homopolymer ausgewählt aus der Gruppe bestehend aus p(g2T2), p(g2T2-g3T2), p(g3T2), p(g2T2-g4T2), p(g1T2-g5T2) und p(g0T2-g6T2) gemäß den chemischen Strukturen 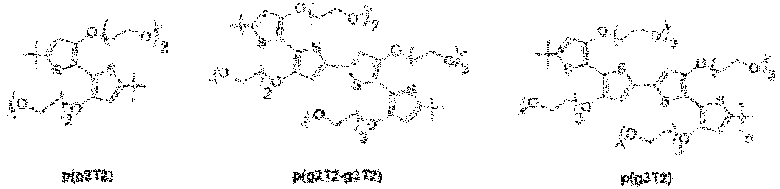 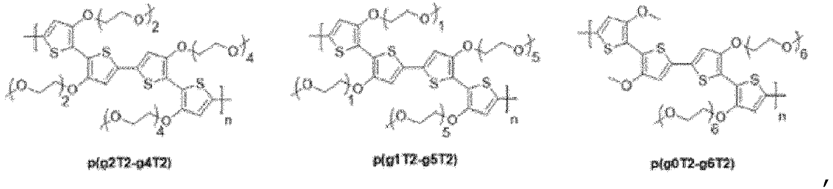 wobei das makromolekulare Material ein Molekulargewicht von über 1000 Da aufweist, eine wässrige Lösung und Ionen umfasst, wobei der Redoxzustand des Alkoxybithiophen-Homopolymers in seinem oxidierten Zustand vorliegt.

## Revendications

1. Dispositif comprenant une première électrode, une deuxième électrode, et un électrolyte liquide, lesdites première et deuxième électrodes étant agencées dans ledit électrolyte liquide et étant agencées pour appliquer une tension électrique audites électrodes, et en outre, ladite première électrode comprenant un matériau macromoléculaire conducteur qui est transférable d'un premier état à un deuxième état lors d'une commutation électrochimique en fonction de ladite tension appliquée entre lesdits électrodes, et ledit matériau, lorsqu'il est présent dans ledit deuxième état, ayant un volume d'au moins 2,5 fois le volume dudit matériau dans ledit premier état, ledit matériau macromoléculaire conducteur étant un polymère conjugué et ledit polymère ayant un squelette hydrophobe comportant des chaînes latérales hydrophiles, et ledit polymère conjugué étant choisi dans le groupe constitué par p(g2T2), p(g2T2-g3T2), p(g3T2), p(g2T2-g4T2), p(g1 T2-g5T2), et p(g0T2-g6T2) selon les structures chimiques 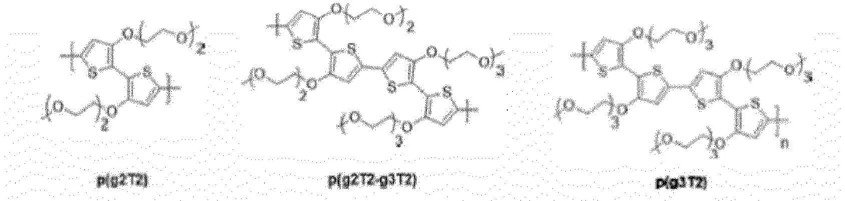 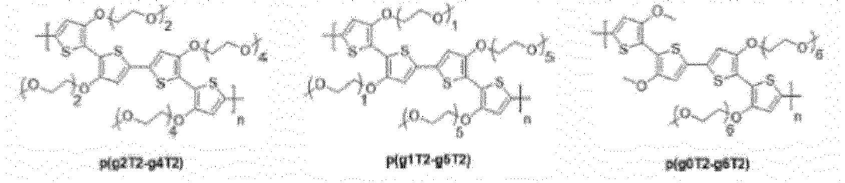 le matériau macromoléculaire ayant un poids moléculaire supérieur à 1 000 Da.

2. Dispositif selon la revendication 1, ledit matériau macromoléculaire conducteur étant revêtu sur ladite première électrode.

3. Dispositif selon la revendication 1 ou 2, ladite première électrode comprenant un substrat électriquement conducteur ou isolant.

4. Dispositif selon la revendication 1, ladite première électrode étant constituée dudit matériau macromoléculaire conducteur.

5. Procédé pour la régulation de manière électrique du volume d'un matériau macromoléculaire conducteur, le procédé comprenant :
une application d'une tension électrique entre une première et une deuxième électrode qui sont agencées dans un électrolyte liquide, ladite première électrode comprenant un matériau macromoléculaire conducteur, ladite tension appliquée transférant ledit matériau d'un premier état à un deuxième état, ledit matériau dans ledit deuxième état ayant un volume d'au moins 2,5 fois le volume dudit matériau dans ledit premier état, ledit matériau macromoléculaire conducteur étant un polymère conjugué et ledit polymère ayant un squelette hydrophobe comportant des chaînes latérales hydrophiles, et ledit polymère conjugué étant choisi dans le groupe constitué par p(g2T2), p(g2T2-g3T2), p(g3T2), p(g2T2-g4T2), p(g1T2-g5T2), et p(g0T2-g6T2) selon les structures chimiques 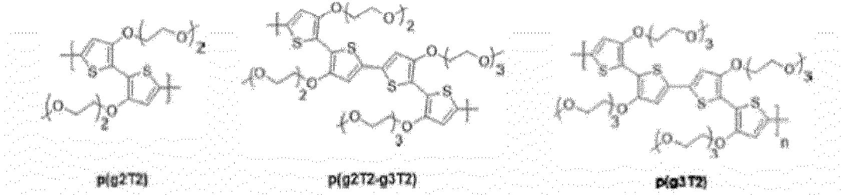 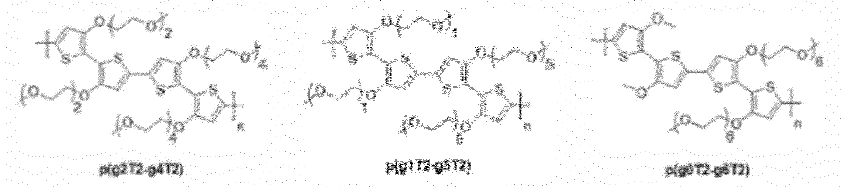 le matériau macromoléculaire ayant un poids moléculaire supérieur à 1 000 Da.

6. Procédé selon la revendication 5, ledit matériau macromoléculaire conducteur étant revêtu sur ladite première électrode, ladite première électrode étant éventuellement un substrat solide ou poreux électriquement conducteur, ou un substrat solide ou poreux isolant.

7. Procédé selon la revendication 5, ladite première électrode étant un substrat poreux conducteur ou poreux isolant revêtu par ledit matériau macromoléculaire conducteur, de sorte que ledit transfert dudit matériau d'un premier état un deuxième état modifie la porosité de ladite première électrode.

8. Procédé selon la revendication 6 ou 7, ledit substrat poreux conducteur étant choisi dans le groupe constitué par des fibres de carbone, des mousses de carbone, des éponges de carbone, des mailles métalliques, des fibres métalliques, des mousses métalliques et des éponges métalliques.

9. Procédé selon l'une quelconque des revendications 5 à 8, la tension étant appliquée dans la plage allant de -1,0 à + 1,0 V, telle que dans la plage allant de -0,8 à + 0,8 V, ou dans la plage allant de -0,5 à + 0,5 V.

10. Procédé selon l'une quelconque des revendications 5 à 9, comprenant en outre une réduction de ladite tension appliquée, transférant ainsi ledit matériau dudit deuxième état de retour vers ledit premier état dans lequel le matériau possède un volume plus faible, et le matériau dans ledit deuxième état ayant un volume qui est entre 2,5 à 3,5 fois le volume dans ledit premier état.

11. Procédé selon l'une quelconque des revendications 5 à 9, ledit transfert dudit matériau d'un premier état à un deuxième état étant irréversible, le matériau dans ledit deuxième état ayant un volume qui est au moins 2, 5 fois le volume dudit matériau dans ledit premier état.

12. Dispositif selon l'une quelconque des revendications 1 à 4, ou procédé selon l'une quelconque des revendications 5 à 11, dans ledit premier état, le matériau macromoléculaire conducteur étant sous forme solide.

13. Dispositif selon l'une quelconque des revendications 1 à 4 ou 12, ou procédé selon l'une quelconque des revendications 5 à 11, dans ledit deuxième état, le matériau macromoléculaire conducteur étant dans une phase de gel.

14. Hydrogel comprenant un matériau macromoléculaire conducteur comprenant un polymère conducteur de polymère d'homo-alcoxybithiophène choisi dans le groupe constitué par p(g2T2), p(g2T2-g3T2), p(g3T2), p(g2T2-g4T2), p(g1T2-g5T2), et p(g0T2-g6T2) selon les structures chimiques 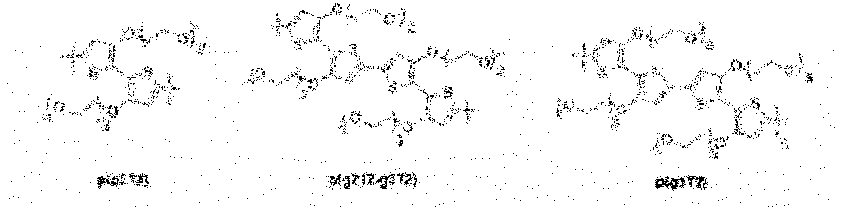 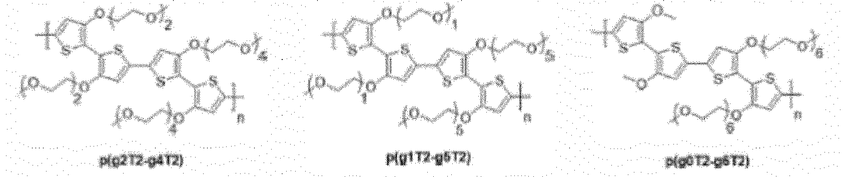 le matériau macromoléculaire ayant un poids moléculaire supérieur à 1 000 Da, une solution aqueuse et des ions, l'état rédox dudit polymère d'homo-alcoxybithiophène étant dans son état oxydé.
